(19) **Europäisches Patentamt / European Patent Office / Office européen des brevets**

(11) **EP 2 885 725 B1**

(12) **EUROPEAN PATENT SPECIFICATION**

(45) Date of publication and mention
of the grant of the patent:
**12.12.2018 Bulletin 2018/50**

(21) Application number: **13750848.7**

(22) Date of filing: **09.08.2013**

(51) Int Cl.:
*G06F 17/30* (2006.01)   *G06Q 30/00* (2012.01)
*G06F 12/08* (2016.01)   *G06Q 10/00* (2012.01)

(86) International application number:
**PCT/EP2013/002390**

(87) International publication number:
**WO 2014/026753 (20.02.2014 Gazette 2014/08)**

(54) **UPDATING CACHED DATABASE QUERY RESULTS**

AKTUALISIERUNG VON GECACHTEN DATENBANKABFRAGEERGEBNISSEN

MISE À JOUR DES RÉSULTATS D'INTERROGATION DE BASE DE DONNÉES ANTÉMÉMORISÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.08.2012  EP 12368020
14.08.2012  US 201213585286**

(43) Date of publication of application:
**24.06.2015  Bulletin 2015/26**

(73) Proprietor: **Amadeus S.A.S.
06410 Biot (FR)**

(72) Inventors:
• **CIABRINI, Damien
F-06370 Mouans-Sartoux (FR)**
• **LEGRAND, Guillaume
Waltham, MA 02453 (US)**

• **JANIN, Benoit
F-06410 Biot (FR)**
• **ISNARDY, Luc
F-06800 Cagnes sur mer (FR)**
• **MAILLOT, Nicolas
F-06410 Biot (FR)**
• **ROBELIN, Charles-Antoine
F-06600 Antibes (FR)**
• **DANIELLO, Rudy
F-06200 Nice (FR)**

(74) Representative: **Samson & Partner Patentanwälte
mbB
Widenmayerstraße 6
80538 München (DE)**

(56) References cited:
**WO-A1-99/22315     US-B1- 6 725 333**

**Description**

FIELD OF THE INVENTION

The present invention is directed to the field of database technology. More specifically, it concerns pre-computing and caching database query results and strategies of keeping these results up-to-date.

BACKGROUND

A common problem in database technology is to ensure short response times to database queries which require processing large volumes of data. For example, such computing-power consuming processing has to be performed in response to so-called "open queries" which contain only little input information (e.g. only one or two parameters out of a dozen possible parameters are specified and/or the specified value ranges of the parameters are broad) and, consequently, lead to a large number of results in general. Possibilities to speed up data processing by increasing hardware performance are limited. Thus, attention is drawn to improving the mechanisms underlying the processing of large data volumes.

One general approach to shorten query times is to pre-compute expected queries and to maintain the corresponding query results in a cache system. Queries are then actually not processed on the large data basis, but are directed to the cache system.

Another issue, however, which comes along with such caching approaches, is to keep the pre-computed query results up-to-date in order to ensure that queries responded by the cached results correctly reflect the status of the corresponding large data basis. In case the underlying data changes, the cached query results get outdated and the cache system would return incorrect results. Thus, strategies are needed how the cache system can be kept up-to-date.

Various relatively simple update strategies are known in the prior art like, for example, re-computing the entire data domain frequently, establishing and maintaining re-computation schedules manually and re-computing data when they are getting too old.

Somewhat more sophisticated update strategies have been developed, as e.g. described by WO 01/33472 and WO 02/25557.

WO 01/33472 concerns an availability system used in a travel planning system. The system includes a cache having entries of availability information regarding airline seats. A cache manager manages entry information in the cache in order to keep information in the cache correct, current, complete or otherwise as useful as possible. In response to a query directed to the cache, the cache manager determines if a stored answer is stale and, if this is the case, sends an availability query to a source of availability information. Cache entries to be modified are obtained by asynchronous notifications from external systems and determined by a deterministic, predictive or statistical model.

Similarly, WO 02/25557 pertains to an information retrieval system wherein information received from information sources is cached for future use, such as for future client requests. Proactive queries can be generated to populate a cache and/or to update presently cached information. In an airline information system, proactive queries are ordered on the basis of statistics or predictive indications such a nearness of departure time, the age of cached data, remaining seats in an aircraft, holidays or special events or equipment type. In addition, updates are received by external notifications from airlines such as AVS messages.

Moreover, WO 99/22315 describes a mechanism for automatically refreshing documents in a cache by using a statistics-based probabilistic model. For each document, the cache determines a probability $Psi(t)$ that a cached object i is stale at a particular time t (i.e. the server has changed that object) and a probability $Pri(h)$ that object i is requested by a user by request time h. The cache refreshes those objects with the highest product $Pi = Psi(t) \times Pri(h)$, i.e. the probability that an outdated object is returned to the user with the next request. To maintain these probability values, the cache maintains and tracks historical statistics for the cached objects such as an estimated mean interval between server updates EUI. EUI of an object is e.g. updated when the object itself is updated by the server or the object is not updated after its estimated mean refresh time has elapsed.

US 6,725,333 relates to managing entities such as an object, an image file, or a webpage, stored in a cache and/or entities which may be stored in a cache. Program code is analyzed to determine if there is at least one statement which affects a desirability of performing at least one cache transaction and, if it is desired the at least one cache transaction is performed. Furthermore, a program analysis tool statically analyzes program code to locate points where object state changes occur, where objects are created and where objects are deleted, and then generates regularized dependencies at such points for and employing the dependencies to invalidate dependent cached queries. More specifically, the program is analyzed to identify one or more statements which may modify a value of one or more cachable entities during run-time of the program. For each of the detected statements, a probability is determined which represents the likelihood that the detected statements will be executed, i.e., the likelihood that one or more cachable entities will change due to execution of the statements. To determine if a cache transaction will be performed, e.g., inserting an object in cache or deleting or updating a cached object, a determination is made as to whether the probability of change of one or more cachable entities meets a predefined threshold. If so, the system may be in favor of not caching one or more uncached entities and/or be in favor of invalidating or updating one or more cached entities. If not, the system may be in favor of caching one or more uncached entities and/or not be in favor of invalidating or updating one or more cached entities.

SUMMARY OF THE INVENTION

According to the present invention, a method of updating pre-computer database query results in a distributed database system is provided as defined in the independent claim 1.
According to another aspect, a database cache platform is provided as defined in the independent claim 13.
According to another aspect, a non-transitory computer readable storage medium is provided as defined in the independent claim 15.
Further aspects are set forth in the dependent claims.

BRIEF DESCRIPTION OF THE FIGURES

The present invention will be described with reference to the accompanying figures. Similar reference numbers generally indicate identical or functionally similar elements.

Fig. 1 illustrates a general overview of the distributed database system;

Fig. 2 shows a more detailed view of the distributed database system in accordance with an embodiment;

Fig. 3 illustrates the components of the cache platform in accordance with an embodiment;

Fig. 4a visualizes a volatility effect over time according to a probabilistic model;

Fig. 4b visualizes an amendment of the probabilistic model in response to a real-time event;

Fig. 5 depicts a flow diagram in accordance with an embodiment of the method;

Fig. 6 shows exemplary resource availability for re-computation in accordance with an embodiment;

Fig. 7 shows a schematic representation of a cache platform computer in accordance with an embodiment.

GENERAL DESCRIPTION

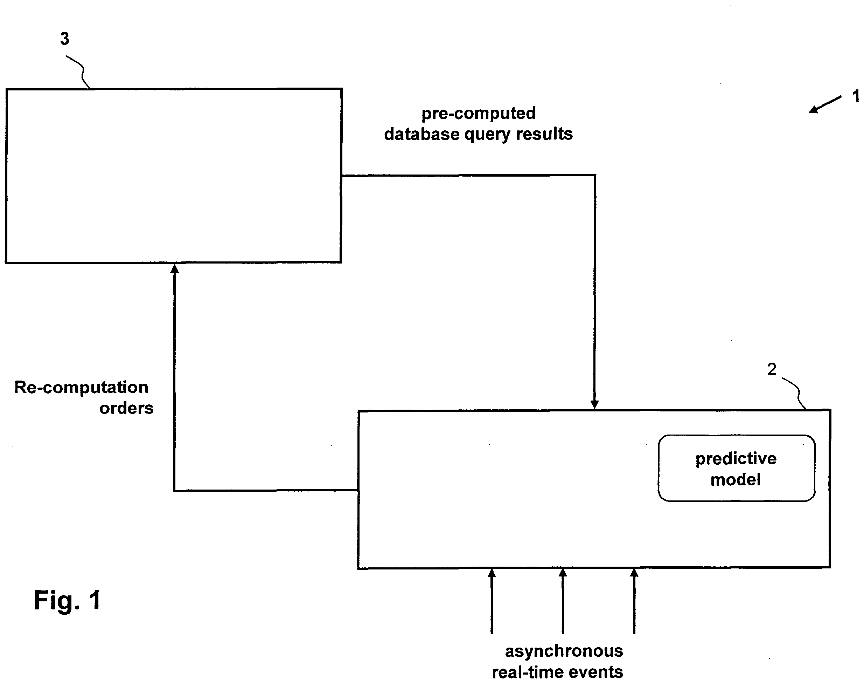

Before turning to the detailed description on the basis of the figures, a few more general aspects will first be set forth with respect to Fig. 1.
In order to be able to handle database queries or batch computation requests which require computations on the basis of large volumes of underlying data, database query results corresponding to expected queries are generally pre-computed and cached (subsequently, the term "query" is used as a general term including any type of information retrieval requests such as transactional queries, requests for batch computations and other forms). The cached results are stored and are returned to the querying entity in response to actually occurring queries. Fig. 1 illustrates such a database system 1 on an abstract level. Basic data is kept in a computation platform 3 which is connected to a cache platform 2. The latter one issues re-computation orders to the computation platform 3 which, in turn, transmits the corresponding results back to the cache platform 2 where the pre-computed query results are stored.
This approach of caching pre-computed query results leads to the general problem that data of the underlying data domain may change over time and, thus, the cached pre-computed query results get outdated. Cached query results which are still up-to-date, i.e. which match the corresponding real-time computation equivalents (results which would be actually computed on demand without having cached pre-computed results available), are called "accurate" cached results hereinafter. Thus, when the cache correctly represents the current state of the data domain underlying the cached query results, the cache is - in general - accurate.
Generally, in order to return correct results on the basis of the cache, one wants to maintain a high degree of correlation between cached database query results which are provided to the querying entity in response to database queries and their real-time computation equivalents. At the same time, however, it is desirable to minimize computation resource consumption caused by re-computations, i.e. to avoid any unnecessary re-computations such as re-computation of still accurate cached query results. Computing resources are limited and, generally, there are not enough computing resources to re-compute all cached query results at all times. Thus, a trade-off between cache accuracy and utilization of the available computing power needs to be found.

The simple approaches of keeping a cache of pre-computed query results up-to-date have several drawbacks.

Re-computing the entire data domain frequently, depending on the amount of data and the available computing resource, e.g. one time per day, might ensure a reasonable balance between cache accuracy and real-time responses. However, this approach is both hardly scalable and inefficient in terms of hardware resource consumption. In particular, also those query results are re-computed which are still valid because the corresponding underlying data has not changed.

Crafting re-computation schedules to determine which query results are to be re-computed at which times manually, by a human administrator, may prove efficient for specific purposes, but it is rigid and inflexible. The schedule needs to be re-crafted again when the assumptions and conditions underlying the schedule change. It also cannot dynamically track a sudden degradation of the cache quality which could arise in the event of massive changes in the underlying data domain. It is also hard to design such a schedule manually, e.g. due to missing objective quality criteria, and to maintain in terms of human costs.

A still further approach is to re-compute data when they are getting too old. Depending on the nature of the underlying data and the query results to be pre-computed, it may, however, be difficult to evaluate good thresholds of "oldness".

In order to render re-computation more efficient, metrics should be defined to evaluate how "unnecessary" a re-computation is. For instance, it is not worth reshooting an entire massive pre-computation every day if less than half of the computed query results turn out to be outdated. On the other hand, if particular classes of query results are known to change frequently, re-computing them several times per day might be beneficial for the accuracy. Consequently, an effective way of assessing or estimating query result accuracy is needed, taking into account both the associated gain on accuracy and the cost of re-computation. According to the cache update strategy presented herein, re-computations of database query results are decided based on probabilities that the cached database queries are outdated, i.e. potentially differ from results obtained by another re-computation. Only those cached query results which have at least a certain, predetermined probability of inaccuracy are re-computed, whereas other cached query results which probably still accurately reflect the underlying data, i.e. they have a lower probability of being outdated, are not re-computed.

The strategy of updating the cache presented herein relies, as a first aspect, on means to estimate the accuracy of the entire cache of pre-computed database query results on the basis of a predictive model. As a second aspect, it is also checked whether those estimations are generally in line with reality, verifying that the model-based re-computation strategy is still valid on the occurrence of actual real-time (and real-life) events which may serve as indications that, for example, a significant part of the data underlying the cached queries has been changed and - due to these changes - also the corresponding cached queries are out-of-date.

The predictive model, on which the estimations of the cache accuracy generally relies, models the discrepancies between the cached query results and presumed actual database query results, i.e. it approximates the accuracy or inaccuracy of any cached query result. The model models, for example, the probable volatility of the cached results over time. Presumptions on the cached results' volatility are concluded and extrapolated from (past) real-world experiences on the subject-matter of the respective data domain. Thus, the predictive model is generally a representation of the reality in terms of volatility and/or accuracy of the pre-computed database query results.

Various types of models may be employed. For example, the predictive model may be a conceptual model which has been generated by a structured modelling process known as scientific modelling. Modelling requires identifying and selecting those aspects and events of the real-world environment (here e.g.: the aspects and events having influence on the volatility and accuracy decreasing over time of the pre-computed and cached query results) and leaving aside other aspects which may not particularly relevant for the model's purpose. Furthermore, the identified and selected aspects may be abstracted and formulated/implemented in processible form such as a computer program and/or mathematical equations. Such a conceptual model may also serve as a means for simulation simulating the behavior (i.e. the volatility / accuracy) of the pre-computed database query results over time. Alternatively, the employed predictive model may be a historic-statistical model which is based on monitoring and evaluating e.g. the volatility / accuracy of the pre-computed query results in the given period of time in the past (e.g. three months) and extrapolates the determined trends into the future. A particular example of such a historic-statistical model is given further below.

For example, the underlying data may be located in the domain of air travel and contain information on flights such as departure and destination airport, airline, departure and return dates, fares, booking classes and the like. This air-travel related data is kept in the computation platform and is queried by customers in order to get knowledge of availability and prices of air flights. Computing prices on the basis of the basic flight data is resource- and time-consuming. Hence, the actual prices are pre-computed and cached in the present cache platform. In this example, the probabilistic model models the volatility of the flight prices over time.

The required knowledge to build such a model can be taken from real-world experiences on the behavior and development of flight prices prior to the departure date. For example, it might be known that flight prices remain relatively stable over the time period prior to one month before the respective departure dates, but get more volatile during the month before the departure date. Hence, the probabilistic model indicates that pre-computed cached prices belonging to flights upcoming in the next month should be re-computed more often than such pre-computed prices which are associated with flights in the more distant future.

In addition to modelling the cache accuracy using the probabilistic model, a severe drop of cache accuracy is prevented by being reactive to real-time events. Re-computation decisions are refined on reception of pre-determined real-time events which might have an impact on the correctness of the cached query results. The real-time events are asynchronous, i.e. the point of time of their occurrence is not predetermined - they can occur anytime. In order to be able to receive and process incoming real-time events, the cache data platform 2 is equipped with external interfaces to communication sources which notify the cache data platform accordingly with the relevant information.

Such real-time events may pertain to particular situations which are not considered in the predictive model. For example, a portion of the cached prices may be affected by a promotion, whereas other prices may go more volatile at a particular time of the year (such as holiday seasons, Christmas etc.). Also "exceptional" situations like a trade fair, a sport event or the like, random events such as strikes or natural disasters could change the presumptions underlying the "normal" model causalities. These particular influences can be considered when determining the probabilities that cached query results are outdated in response to respective real-time events representing such exceptional situations. Alternatively, the impact of scheduled events such as trade fair, holiday seasons, sports events and the like can be introduced into the probabilistic model in good time before the date of the event.

It is important to note that the update strategy presented herein is capable of taking into account "uncertain" events, i.e. such events which do not invalidate one or more pre-computed cached query results with certainty, but only indicate that the probability might be increased that cached database query results are outdated. In other words, these events are indeterministic with regard to the accuracy of cached query results and only have a probabilistic influence on the discrepancies between cached query results maintained in the cache platform 2 and presumed actual database query results resulting from a hypothetical re-computation. This is different from the proposals described in WO 01/33472 and WO 02/25557 wherein the AVS messages, for example, indicate that a particular flight has been cancelled. Consequently, on reception of such an AVS message, it is known with certainty that the respective airplane seats are not available anymore.

For example, referring to the scenario of travel-related data storage as mentioned above, a real-time event having only a potential impact on the accuracy of the cached query results could be a fare update. A fare is a set of data including parameters like departure and destination city, booking class, flight type (one-way or round-trip), an amount of money and rules which define constraints that must be met for the fare to actually apply. Thus, fares represent the basic data for price calculation of a particular flight. If fares for a specific origin-destination-city-pair are updated by the airline, the likelihood may be increased that a precalculated and cached flight price regarding this city pair is not correct anymore. However, from the perspective of the data cache platform 2, this is not certain because the fare which was actually applied by the pre-computation platform 3 when pre-computing the cached price is unknown to the data cache platform 2. For example, the fare applied for the previous pre-computation might have actually not been changed and the fare changes indicated by the fare change event do not change the fact that the previously pertinent fare still applies and, therefore, the price calculated before remains valid. Or, the previously applied fare is actually changed, but - due to the change - another fare now applies for calculation of the flight price in question which, in the end, has the effect that the cached price actually remains valid.

Thus, on the observation of such real-time events, the data cache platform 2 can only guess with an indeterministic likelihood that certain cached query results are now outdated and it would be advantageous to re-compute them in order to keep the cache accurate. However, this is not a certain fact and it may well be that the respective cached query results - although their probability of being outdated has increased - are actually still accurate.

The determination of probabilities that cached database query results are outdated is performed in two logical steps: Generally, at the first logical level, the probabilities are identified by using the probabilistic predictive model. Subsequently, at the second logical level, these determined probabilities may be amended in response to incoming real-time events.

Based on the probabilities determined in this manner, the data cache platform 2 automatically generates and issues re-computation orders to the re-computation platform 3 via an appropriate network interface between the two entities (cf. Fig. 1). Generally, re-computation orders are generated with respect to those cached query results which have a higher probability of being outdated than other cached query results which have a lower probability of being outdated. This general rule of thumb may be implemented by using threshold values of the probabilities: Cached query results with a determined probability of being outdated above such a threshold value, need to be re-computed. Accordingly, respective re-computation orders are sent out. Cached query results with a determined probability of being outdated at or below such a threshold value, are considered as likely being still accurate and consequently do not need to be re-computed. Accordingly, no re-computation orders are issued with respect to these cached query results.

The available computation capacities at particular times are taken into account by the data cache platform 2 before sending out the re-computation orders. In order to be capable to consider available resources, the data cache platform 2 needs to have knowledge about the degree and/or schedule of the computation platform's 3 capacity utilization and free computation resources, respectively. The relevant information are populated via the communication link between the two platforms.

In response to receiving a re-computation order, the re-computation platform 3 re-computes the respective query results and returns them to the data cache platform 2 where they are stored and the monitoring and determination of the probabilities recurs.

It is preferable to consider the relation between the probabilistic model and occurring real-time events before deciding whether or not a re-computation decision should be amended or overridden in response to a particular real-time event. Basically, real-time events should be analysed whether and to which extent they are already present in the probabilistic model.

This determination whether or not and to which extent an event is present in the probabilistic model generally depends on the type of the model used. If, for example, the model is a conceptual model being the result of a scientific model generation process (as briefly outlined above), the skilled person having generated this model is aware which aspects, events and assumptions have been considered to be relevant for and incorporated into the model and which other aspects, events and assumptions have been regarded to be of less relevance and have therefore not been included in the model. In this case, it is therefore generally known which asynchronous real-time events are represented in the model and which are not.

If, on the other hand, the model is a historic-statistical one which is mainly based on past developments and trends of the volatility, accuracy and/or popularity of the pre-computed database query results, it may not known from the outset which events have led to this particular behavior of the pre-computed query results' volatility / accuracy /popularity in the past. However, it is possible in this case as well to make an approximation whether or not a particular asynchronous is included in the probabilistic model. One approach is, for example, to determine the actual accuracy of pre-computed database query events (e.g. by re-computing a representative sample of them and comparing the re-computation results with the cached query results) and compare it with the predicted accuracy indicated by the probabilistic model. If the actual (sample) accuracy is substantially lower than the predicted accuracy, e.g. below a given threshold, it can be assumed that the probabilistic model is unaware of the particular asynchronous real-time event, i.e. the event is not represented in the model (otherwise, the model would also have indicated a lower accuracy). If, on the other hand, the actual (sample) accuracy is in the area of (i.e. only insignificantly below, at or even higher than) the accuracy predicted by the probabilistic model, it can be assumed that the asynchronous real-time event has been included in the probabilistic model (or it is only a negligible event having only limited influence on the volatility or accuracy of the pre-computed database query results). A more detailed example of this approach is given further below.

For such events which are sufficiently represented in the model, no amendments of the probabilities are necessary as their occurrence has already taken into account when determining the probabilities of the respective cached database query results on the basis of the probabilistic model. If, on the other hand, a real-time event is found to be not represented in the probabilistic model, it is immediately taken into account and the probabilities are amended (i.e. increased) and, potentially, re-computation orders regarding the respective cached database query results are issued due to the amended probabilities.

Optionally, occurring real-time events which are present in the probabilistic model to some extent are accumulated in order to assess trends. If an accumulation of actually emerging real-time events generally modeled by the probabilistic model indicates a burst the extent of which is beyond what is considered by the model probabilities are amended and, if applicable, re-computation orders are overridden accordingly.

Optionally, events are also accumulated and analyzed in groups in order to filter out events which might outdate too few cached query results and/or might be considered irrelevant. Also for this reason, events are logged, collected over time and handled in an aggregated manner. In this way, generating too much re-computation orders in response to low-impact events is prevented and, thus, a disproportional increase of computation resource costs is avoided.

In summary, taking into account real-time events potentially influencing the accuracy of cached database query results at least above a predetermined extent provides a high reactivity to cache degradation.

The present cache update strategy can, for example, be used in conjunction with Amadeus' Massive Computation Platform (MCP) which is subject EP 2521074 A1. Employing the present data cache platform in coexistence with the MCP, an enhanced subsystem is available for triggering MCP re-computation. Database query results such as travel recommendations generated by the MCP are duplicated and stored in the data cache platform for further analysis. Re-computation decisions are made on the basis of a probabilistic model which itself may be composed on the basis of statistics data taken from other Amadeus services. In addition, real-time events such as flight fares changes, airplane seat availability changes, booking class invalidations, client flight ticket requests, user quality feedback events, flight cancellations and/or the like are taken into account.

One exemplary application for the present cache update approach is pre-shopping. Before actually booking a travel, end users of the travel industry normally want to inform themselves about available flights including current flight prices, without any commitment to actually book the flight. Very often, such non-binding requests for pre-booking information take the form of open and broad database queries which would require an enormous amount of computing resources when computed only at the time of query. Moreover, customers expect the requested information to be delivered virtually instantaneously in response to their queries. Thus, pre-shopping query results such as priced air travel recommendations are usually pre-computed and cached. Consequently, travel industry pre-shopping forms a suitable application for the cache update strategy proposed herein.

DETAILED DESCRIPTION

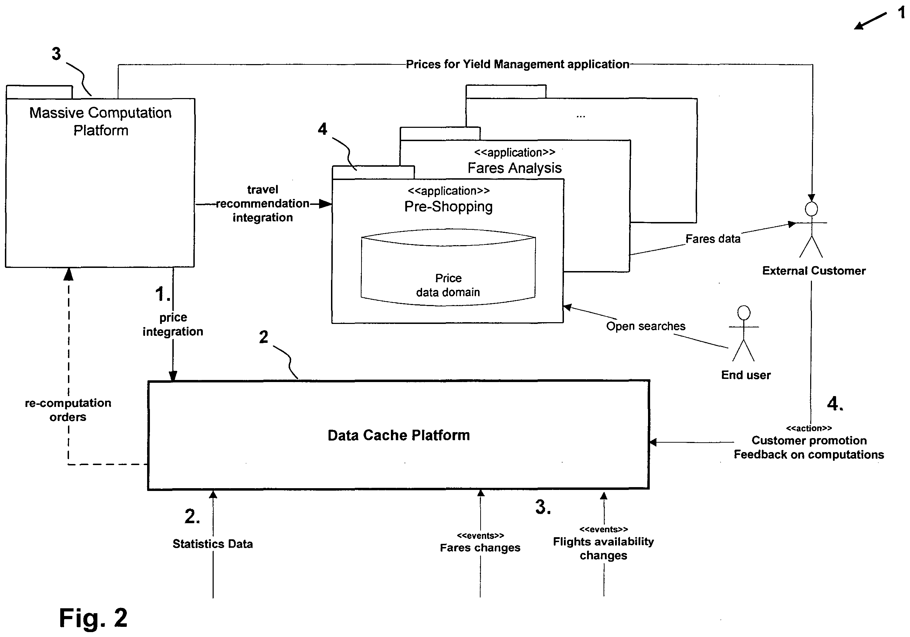

Now turning to the more detailed description, Fig. 2 shows an overview of the distributed database system 1 according to an exemplary embodiment. The embodiments described subsequently relate to databases in the travel industry. Specifically, an embodiment is presented in which the computation platform 3 maintains data on air travel offers and the cache data platform 2 stores prices related to these air travel offers which the computation platform 3 calculates on the basis of calculation rules, in particular flight fares and their associated calculation rules. However, it should be noted that these embodiment are examples only for the purpose of illustrating the present cache update strategy in more detail. The cache update strategy presented herein can be applied to any kind of data and database query results independent from the structure and/or semantics of the data and the cached results.

As described above, the main entities of the distributed database system 1 are the data cache platform 2 (hereinafter briefly referred to as DCP) and the computation platform 3. In the example of Fig. 2, the computation platform 3 is a Massive Computation Platform (MCP) as disclosed in the European Patent application 11305518. The DCP 2 and the MCP 3 are coupled via at least one communication link which is/are utilized to transmit re-computation orders from the DCP 2 to the MCP 3 and, in response, pre-computed priced travel recommendations (hereinafter also briefly referred to as "prices") back from the MCP 3 to the DCP 2.

The DCP 2 is equipped with additional communication interfaces for incorporating data which it uses for the determination of the accuracy probabilities of the cached prices. These interfaces include, for example, communication links for incorporating statistical data which forms the basis of the probabilistic model and for receiving asynchronous real-time events such as fares changes and flight availability announcements populated by airlines or customer promotion campaigns.

In addition, the distributed database system 1 may comprise application platforms 4 that organize and maintain data which can be queried by end users or external customers such as travel agencies. Application platforms 4 are populated and updated by the MCP 3 via respective communication links between MCP 3 and application platforms 4. This population and update is triggered by the re-computation orders issued by the DCP 2.

As described in general above and more specifically below, in response to the re-computation orders received from the DCP 2, the MCP 3 re-calculates the prices of the travel recommendations and returns them to the DCP 2. Simultaneously, however, the MCP 3 also forwards the recomputed priced travel recommendations to the application platforms 4 and which store them as well (as indicated by "travel recommendation integration" in Fig. 2). Consequently, also the application platforms 4 cache the pre-computed priced travel recommendations which are queried by users, on the basis of the cache update strategy implemented by the DCP 2. Thus, the present cache update strategy is leveraged to applications which provide benefits to users, e.g. in form of instant responses to open queries. In such an arrangement, the data cache platform 2 acts as a control platform arranged to control and trigger the updates of the application platforms' 4 caches. Thus, the cached database query results stored in the data cache platform 2 are not actually accessed or queried by any users or customers, but merely form the control data basis on which the cache update strategy is performed. However, in other arrangements, the data cache platform 2 may also be directly queried by users or customers, or - in other words - the present cache update strategy may be implemented directly in one or several application platform(s) 4 as opposed to a separate control entity.

The application platforms 4 comprise, for example, a pre-shopping application platform, a fares analysis application platform and other platforms. The pre-shopping application platform is queried by end users who wish information about flight availability and prices. For example, an end user could direct a query to the pre-shopping application in order to obtain an overview of prices of travel offers during the holiday season departing from Nice below 500 Euros. Due to the pre-computed priced travel recommendations cached in the pre-shopping application which are updated in line with the present cache update strategy, prices of the respective flights do not need to be computed at the time of the occurrence of the query. Rather, a list of travel offers fulfilling these rather unspecified constraints can be returned very fast on the basis of the priced travel recommendations cached in the pre-shopping application platform. The user can then select a travel from the returned list that suits him/her best and can then issue a further request for actually booking this travel. The second request is then processed by a booking engine (not shown) which calculates the current and actual price and suggests a binding offer to the user.

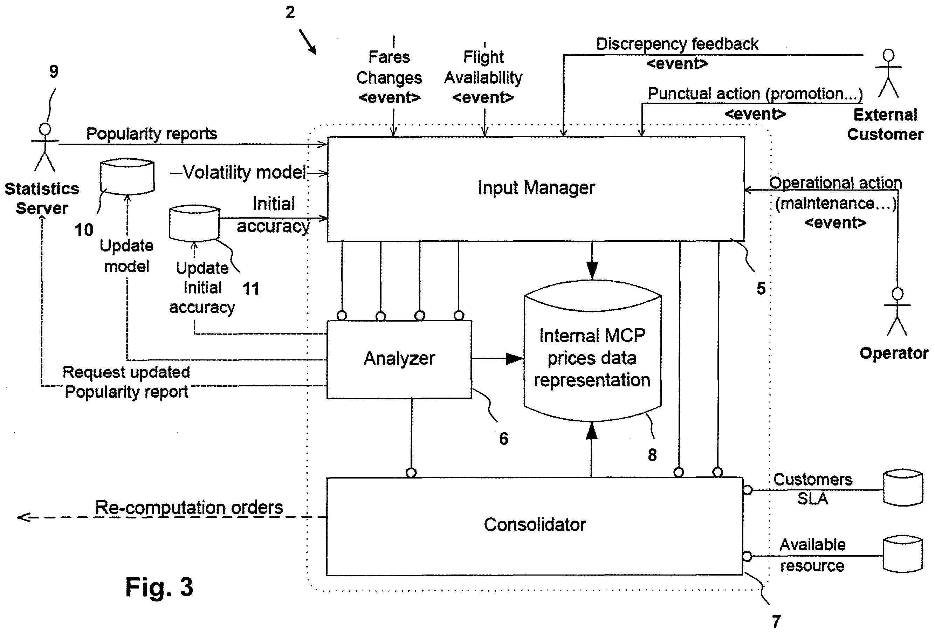

Now having a closer look at the structure of the data cache platform 2 which is depicted by Fig. 3, the data cache platform 2 is composed of three modules:

- The input manager 5 is responsible for receiving inputs such as pre-computed database query results from the MCP 3, asynchronous real-time events and other information such as statistical data to feed and update the probabilistic model.

- The analyzer 6 utilizes the probabilistic model on the basis of which it is arranged to determine candidate cached query results to be updated.

- Finally, the consolidator 7 amends the probabilities determined by the analyzer 6 and - when necessary - also the probabilistic model on the basis of observed real-time events (the latter is not shown in Fig. 3).

In addition, the DCP 2 includes an internal database 8 which keeps the cached priced travel recommendation data. This representation only retains attributes of the price information which are relevant for assessing the out-of-date probabilities and deciding on the re-computation decision, such as, for example: city pair, the departure date, stay duration, and date of last computation, all of which being outputs of computations returned by the MCP 3. Other data utilized by the MCP 3 in order to perform its computations such as fares are not mirrored to the DCP 2 as they are not necessary to perform the cache update strategy. On the other hand, however, the DCP 2 enriches its data with meta-data attributes (which are not part of the data sets returned by the MCP 3), such as an initial presumed accuracy (chances that a price just re-computed by the MCP 3 differs from calculation for booking), volatility (indication of the probability that a price differs from calculation for booking since its last computation) and a popularity (how often the flight is searched for and booked). The data needed for setting these attributes is kept in external databases such as a volatility database 10, an initial accuracy database 11 and statistics servers 9. The meta-data attributes represent the probabilistic model (and therefore depend on the specificities of the probabilistic model) on the basis of which the analyzer 6 determines the probabilities whether cached prices might be outdated (as will be explained in more detail below).

The input manager 5 is arranged to convert and integrate all the heterogeneous sources of information into the local representation database 8 of the prices returned by the MCP 3. It records events and actions that potentially impact modeled prices. These events include customer promotions and customer discrepancies feedback. Furthermore, flight availability events like flight cancellations do not only invalidate the cached travel recommendations which are directly based on the canceled flight, but may also influence parallel cached data such as flights of the same city pair which are scheduled at the same time of the cancelled flight. These real-time events are then forwarded to the consolidator 7 which processes them further in order to amend out-of-date probabilities and re-computation decisions.

Due to the amount of information involved in caching the priced travel recommendations, it is beneficial to employ encoding techniques. By this, the priced data cached in the DCP 2 is globally mapped to the underlying data domain kept in the MCP 3 while reducing costs for storage resources significantly. Probabilistic encoding is, for example, implemented by using Bloom Filters. The effect of such encoding is twofold. First, Bloom filters are conservative. They allow to positively track at least and in any case those prices which are probably impacted e.g. by a real-time event indicating fares changes, but they are not wrong on the reverse, prices which are considered to be not affected are actually not affected. So there is no risk of failing to recognize prices potentially influenced by such a fares change event. Secondly, the amount of false positive indications strictly depends on the allocated size of the Bloom Filter, so one can limit their occurrence as needed.

The second module, the analyzer 6, performs the first, general level of determination of the probabilities whether the cached priced travel recommendations are outdated based on the model of probabilistic degradation of the accuracy of the pre-computed prices kept in the DCP 2. It examines and evaluates the meta-data added to the prices by the input manager 5, as explained above. The probabilistic model represented by this meta-data thus includes metrics regarding price volatility included by the volatility database 10, initial accuracy of prices incorporated from the initial accuracy database 11 and the popularity of flight recommendations as returned by popularity reports from the statistics servers 9. It outputs probability and priority information regarding the cached prices to the consolidator 7, i.e. indications which prices need to be recomputed with priority based on the static probabilistic information only (i.e. without considering any event).

More specifically, an exemplary probabilistic model is based on the following parameters for a pre-computed database query result $x_i$:

- The age $t_i$ of the pre-computed query result: the time since the last computation of this pre-computed query result by the MCP 3.
- The volatility $\lambda_i$ of the pre-computed query result which can be derived from the occurrence and the outcomes of past computations.

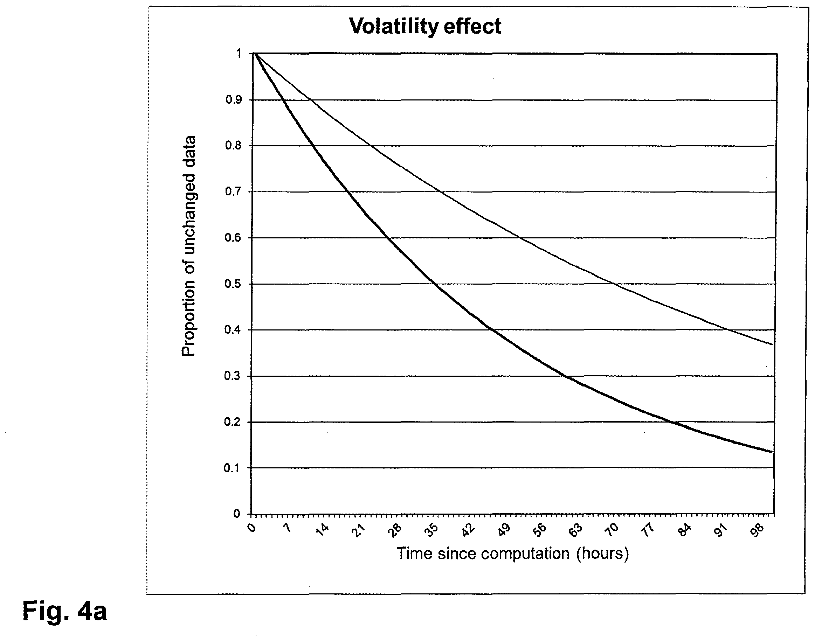

- The volatility $\lambda_i$ can be employed to provide an estimate of the probability for a pre-computed query result to stay unchanged after a given time: $P(\text{unchanged after } t) = e^{-\lambda_i t}$. This is also referred to as the probability the expected

accuracy $acc_i^t = e^{-\lambda_i t}$ or, more general, as the probability of a pre-computed database query result being outdated. Two exemplary functions of this probable accuracy decreasing over time are depicted in Fig. 4a.

- The initial accuracy: pre-computed database query results generated by the MCP 3 may not necessarily be accurate even at computation time if e.g. the MCP 3 itself bases its computations on cached (and therefore outdated) data. This leads to additional discrepancies between pre-computed database query results computed by the MCP 3 and computation results hypothetically been generated by accurate underlying data. This discrepancy may be measured if respective feedback is available It can be inferred e.g. from the previous computations that pre-computed database query result $x_i$ has a probability $a_i$ to be accurate at the time of computation by MCP 3. It means that the probability for a pre-computed database query result to be accurate after a given time $t$ is $\alpha_i e^{-\lambda_i t}$.

- The accuracy of the overall pre-computed database query results kept in the DCP 2 according to this model may then be considered as the mean accuracy:

$$GlobalAccuracy = Avg\left(a_i\ e^{-\lambda_i t_i}\right)$$

- The popularity $p_i$ of the pre-computed database query result: it is the average access frequency to this pre-computed database query result by the end users. As also briefly presented further below, it may be desirable to achieve a better accuracy for the pre-computed database query result that are often requested by the users. Thus, the accuracy of the whole cache as seen by the users may also be defined in that each accuracy value is weighted by the popularity. Thus, the proportion of accurate accesses to the pre-computed database query results as opposed to the expected proportion of accurate pre-computed database query results is included:

$$UserAccuracy = \sum \frac{p_i}{p_{tot}}\ a_i\ e^{-\lambda_i t_i}$$

These parameters of the probabilistic accuracy model are for example set according to statistical history data derived from the statistics server 9 based on several days, weeks or months of history. Every single pre-computed database query result is modeled with these parameters in order to predict the state of the pre-computed database query results and thus to predict the quality of the whole cache.

There are several ways of utilizing the information of the probabilistic model in order to prioritize and to decide which prices to re-compute next. The analyzer 6 is configurable to apply those strategy or a strategy mix depending on the situation (e.g. in accordance to an agreement with the customer owning the underlying travel data in the MCP 3, depending on the amount of data, depending on the available computation resources, depending on the objection in which way the cache should be optimized). The following strategies may be applied:

- Accuracy of prices: This aims at maximizing the global accuracy of the date domain. Presumably inaccurate prices are re-computed first.
- Accuracy of prices, weighted with the popularity: Among the priced which are likely to be inaccurate, more popular prices will be re-computed with higher priority than less popular prices.
- Accuracy of prices, weighted with the popularity and by their age: Like the previous strategy, but also taking into account the time of the last re-computation. This strategy prevents re-computation starvation caused by very volatile prices, in particular in the context where re-computation resources are limited as compared with the amount of prices which generally should be re-computed.
- Modulate the popular city pairs based on their geo-location and on the re-computation hour: This strategy additionally takes statistics into account which city-pair flights are queried more often at particular times of a day. As an effect, frequent re-computations are avoided at those times at which flights of specific city pair are seldom accessed (because inaccurate cached data does not harm as long as respective queries actually do virtually not occur).

As a side effect, the analyzer 6 updates the volatility model database 10 based on the values of recently re-computed prices received from the MCP 3 and incorporated into the DCP 2. As the analyzer can track the actual volatility of cached prices based on repeating re-computations, it can feed these statistical information back to the volatility model database 10. To update the volatility model, the analyzer 6 counts the number of differences between the newly computed price results and the previously received price values. From these differences it updates the volatility parameters for the respective parts of the analyzed prices.

Likewise, the analyzer 6 may update the initial accuracy database 11 in the same manner. It may also ask for other popularity reports, for example, if prices from new city pairs have been integrated in the DCP 2 for the first time.

In case there are no history and statistical data, respectively, for volatility, accuracy or popularity of prices, the analyzer 6 performs its processing with default parameters to be as conservative as possible.

Turning now to the third module, the consolidator 7 performs the second level of the probability determination by taking into account incoming real-time events. In addition, it is the entity which generates the re-computation orders and issues them to the MCP 3. It takes the outputs of the analyzer 6 as a base for its decision. These provide a first estimate of the re-computation priorities for all prices of the data domain. Then, it overlays all the information gathered from the various sources of real-time events to amend the re-computation priorities. This results in enhanced re-computation priorities.

Optionally, it may consider any customer service level agreement such as, for example, "guarantee that all prices will be recomputed at least once every week", and amend the priorities accordingly. It selects those entries in the internal prices data representation 8 with the highest priorities first and marks them for re-computation. As the consolidator preferably has knowledge of the computation resources available at the MCP 3, it is able to earmark as many cached prices as can be re-computed by the MCP 3 in a particular time interval. It then sends the resulting re-computation order to the MCP 3.

Information from real-time events is a means to improve the accuracy of the cached data over strict statistical modelling. They can be used to track what is really happening instead of only what was expected. It is a means to control the predictions of the statistical model and amend them/it when the predictions are proved wrong or inappropriate. Several classes of real-time events can be envisaged with respect to the present embodiment:

Actors' events generally occur selective (i.e. from time to time), but may have a drastic influence on the re-computation decisions. Externals customer may provide feedback on the discrepancies between cache and shopping that he is experiencing on his own platform. This feedback can be used to amend the accuracy predicted by the statistical model and thus force sooner re-computations when needed. When a provider of data stored in the MCP 3 (e.g. a travel provider offering travels) performs a promotion campaign promoting flights on certain city pairs, it can be assumed that these prices are more volatile and get outdated more often. Thus, the re-computation frequency of these prices during the promotion campaign might be needed to be increased. As another example, a maintenance operation for the MCP 3 may be necessary from time to time or operational issues may be experienced within the system 1. In such cases, the DCP 2 can be commanded to generate less or no re-computation orders until the maintenance is done and the issue is recovered, respectively.

Availability events indicate a real-time status on the accuracy of cached flights. Depending on the statement of the event, it may be known with certainty that a specific price of the underlying data domain in the MCP 3 has changed and the price cached by the DCP 2 has therefore become invalid. However, also other prices may be affected, wherein the effect is uncertain and, therefore, the probability that these prices are outdated may be increased. For instance, a "class closed" event indicates that a particular booking class has become full for a particular flight. Seats in this flight and class are no longer bookable and thus the respective prices cached by the DCP 2 have become invalid with certainty. However, this might be considered as an indication that other classes of the same flight and/or seats in the same class in other flights departing shortly before or after this flight might get more volatile. Thus, their probabilities of getting outdated might increase and re-computing of these prices might be beneficial. As another example, it is experienced that low-cost carriers set the price of their seats depending on the flight occupancy. Upon notifications of occupancy changes, respective cached prices can quickly be re-computed and thus cache accuracy is improved/regained.

The implications of changes-of-fares events are difficult to estimate. Simply said, fares contain information and logic such as rules which are used to calculate a price of a particular flight. Thus, when calculating the actual price of a particular flight, a set of fares is accessed, it is decided which fare is relevant and is actually to be applied and, finally, the price is calculated. Thus, there is a relationship "flight → fare(s)" (which, however, also may change over time, as the constraints which fare applies to a particular flight can change). However, relations in the other direction "fare → flights" are generally not tracked, i.e. it is not clear which fare does apply to which flights. Moreover, a change in a fare potentially impacts a huge amount of prices calculated from the underlying data domain.

In order to determine the impact of fares events, the communication between the MCP 3 and the DCP 2 can be utilized to provide the DCP 2 with a mapping to fares applied by the MCP 3 for computing prices. When computing prices in response to re-computation orders, the MCP 3 records all fares accessed for calculating the requested prices. This information is then stored globally in a mapping fares ↔ flights and maintained during every computation by the MCP 3. At the time a fares change event is received, the input manager 5 searches this global mapping in order to determine the flights impacted by the fares change event and marks them as "updated". Note that a fare change does not necessarily imply a price change for a travel recommendation, as briefly explained above.

The consolidator 7 first assesses the potential influence of the real-time event on the cached prices rather than initiating re-computation of cached travel recommendations without having considered the relationship of the event with the basic probabilistic model. Such events are first analysed with respect to their representation in the probabilistic model.

As outlined above, the specificities of this analysis depend on the type of probabilistic model used. In the case of a conceptual model, it is known from the model generation process which events have been considered in the probabilistic model. Thus, incoming events are checked against the characteristics of the probabilistic model known from the model generation process in order to determine whether or not a particular event is present in the model.

On the other hand, a historic-statistical model may be used and it may accordingly not be known a priori which events have led to the historic-statistical data basis of the model. In this case, the following approach may be taken in order to determine whether or not a particular event is represented in the probabilistic model (for completeness: The following approach is not limited to any particular type of probabilistic model and can also be employed e.g. for conceptual models).

Depending on the size of the data domain formed by all cached pre-computed database query results, the cached database query results are subdivided into smaller portions, referred to as "shares" hereinafter. In the example of the pre-computed database query results being priced travel recommendations, the shares are, for example, formed by origin-destination pairs, i.e. one share includes all pre-computed priced travel recommendations having the same origin and destination location. Alternatively, if the data domain is only of limited size, no subdivision is performed. In other words, in this case, there is only one share covering all pre-computed database query results kept in the DCP 2.

After an asynchronous real-time event is detected, one share or more shares potentially affected by this event, i.e. which contain pre-computed database query results which may have an increased probability of being outdated due to the detected event, are identified. An actual accuracy of the at least one share is determined, e.g. by estimating its accuracy by re-computing a particular or random sample of pre-computed database query results in the share. For example, if the share contains 10,000 pre-computed database query results, a sample of 20 pre-computed database query results is re-computed. This re-computation is performed similar to other re-computations. The DCP 2 generates and issues re-computation orders to the MCP 3. The MCP 3 performs the re-computations and returns their results, i.e. the updated sample pre-computed database query results to the DCP 2. The DCP 2 compares the results of the sample re-computations with the corresponding database query results previously cached and, e.g., determines the percentage of the sample pre-computed database query results having changed (i.e. which have been outdated or inaccurate) and/or the percentage of the sample pre-computed database query results being unchanged (i.e. which have not been outdated and were still accurate). These percentages of the sample pre-computed database query results might be transferred to the overall share as an estimation of the overall share's accuracy, i.e. it could generally be concluded from these sample percentages that the overall share is similar (in-)accurate as the sample.

At a next step, the determined actual accuracy of the share is compared with the share's accuracy predicted by the probabilistic model. Depending on the outcome of this comparison, it is concluded whether or not and, possibly, to which extent the particular asynchronous real-time event is represented in the probabilistic model. If the determined actual accuracy is below the accuracy predicted by the probabilistic model to more than a given extent, i.e. the sample accuracy is substantially lower than the accuracy predicted by the model, the event is not considered to be included in the probabilistic model. If, on the other hand, the determined actual accuracy is below the accuracy predicted by the probabilistic model less than the given extent, or both accuracies are identical or the determined actual accuracy is even higher than the predicted accuracy, the event is considered to be represented in the probabilistic model. The difference between both accuracies is also an indicator of the extent to which the event has been incorporated in the model.

It is noted that the sampling itself can be recognized as a way to detect occurred asynchronous real-time events in the first place. In addition or alternative to explicit indications of asynchronous real-time events such as an indication from an airline that a particular flight has been cancelled or an indication of a promotion campaign, sampling may be utilized to implicitly detect asynchronous real-time events which are not explicitly indicated by a third party. To this end, a continuous or regular sample process over all shares may employed in order to estimate the actual accuracy of all shares of pre-computed database query results. This allows implicitly detecting events not reflected in the probabilistic model if the comparison of the determined actual accuracy and the accuracy predicted by the probabilistic model turns out that the first one is substantially lower than the latter one.

It is further noted that the identification of one share or more shares potentially affected by a detected event depends on the characteristics of and knowledge about the events. If, for example, an event has been implicitly detected by a cyclic sampling process, the potentially affected shares have been determined at the same time (namely those shares which determined actual accuracy is substantially lower than the predicted accuracy). On the other hand, an explicit signaling of an event may also contain an indication of potentially affected pre-computed database query results. If, for example, an airline has signaled cancellation of a particular flight, the prices of flights between the same origin and destination during times before and after the cancelled flights might be considered to be potentially affected. Furthermore, it may be known from past experience which (explicitly signaled) events have potential impact on the accuracy of which pre-computed database query results. For example, it is possible to re-track which real-time and real-life events have been responsible for decreased accuracies of shares detected by a continuous sampling process and to gain knowledge about the usual impact of certain asynchronous real-time events in this manner.

The above analysis of estimating the actual accuracy of shares and comparing it with the accuracy predicted by the probabilistic model is now described in more detailed and more formal manner.

The actual accuracy of one pre-computed database query result $x_i$ is referred to as **$Acc_i$**. Pre-computed database

query results $x_i$ is, at a particular point of time, either accurate (**$Acc_i$ = 1**), i.e. equal to the result of its re-computation, or inaccurate (**$Acc_i$ = 0**), i.e. different from the results of its re-computation. The collection of all pre-computed database query results can be logically split into shares $D_j$. The following considerations relate to one specific exemplary share **D**. The average accuracy of the pre-computed database query results contained in share **D** as predicted by the probabilistic model is denoted as **$Acc_{model}$(D)**. On the other hand, the proportion of actually accurate pre-computed database query results in **D** is referred to as **Acc(D)**.

As described above, in order to determine or estimate **Acc(D)**, a sample re-computation of **N** pre-computed database query results in **D** is performed. The number of accurate results among the **N** is referred to as **$AC_N$**, i.e. after having re-computed the **N** sample pre-computed database query results, **$AC_N$** re-computed database query results are identical with their previously cached correspondents while **(N - $AC_N$)** re-computed database query results differ from their previously cached correspondents and have therefore been found inaccurate.

As indicated above, the accuracy probability for one pre-computed database query results $x_i$ within share **D** is **Acc(D)**.

This can be generalized for the sample **N** pre-computed database query results within **D** by employing the Binomial law **$AC_N \sim B$ (N, Acc(D))**. Thus, the probability that K pre-computed database query results out of the N samples are accurate is

$$P(AC_N = K) = \binom{K}{N} \times Acc(D)^K \times (1 - Acc(D))^{N-K}$$

The statistical expectation of this law is **$E(AC_N)$ = N x Acc(D)**.

Therefore, the relation $\dfrac{AC_N}{N}$ is an estimation of the actual accuracy of share **D**, **Acc(D)**, which is conveyed by the result of the sample re-computation of the **N** sample pre-computed database query results. On the other hand, **$Acc_{model}$(D)** is the accuracy estimation of **Acc(D)** given by the probabilistic model.

In order to determine whether or not a given real-time event is present in the probabilistic model, it needs to be decided if $\dfrac{AC_N}{N}$ or if **$Acc_{model}$(D)** is the more trustworthy approximation of **Acc(D)** in the likely case that both values differ from each other, in particular if $\dfrac{AC_N}{N}$ << **$Acc_{mode}$)(D).** To prepare this decision, two hypotheses **$H_0$** and **$H_1$** can be stipulated:

**$H_0$**: The prediction of the probabilistic model appropriately indicates the accuracy of share **D**, i.e. **Acc(D) $\cong$ $Acc_{model}$(D)**.

$\dfrac{AC_N}{N}$ is lower than **$Acc_{model}$(D)** due to statistical deviations caused by the sampling process (i.e. accidentally, the selected N pre-computed database query results are more inaccurate that the average of all pre-computed database query results in **D** and therefore the N samples do not representatively reflect **Acc(D)).**

**$H_1$**: Something happened which was not expected by the probabilistic model and therefore **$Acc_{model}$ (D)** is an inappropriate estimate of **Acc(D)**. Rather, the actual accuracy estimation achieved by the sample re-computation is the best estimation available, i.e. $Acc(D) \cong \dfrac{AC_N}{N}$ .

Taking the decision **$D_0$** that **$H_0$** is true or the decision **$D_1$** that **$H_1$** is true can be done the following way:

If the actual accuracy is lower than the predicted accuracy to more than a given extent, there is an increased likelihood that the accuracy predicted by the probabilistic model is inappropriate and needs to be reduced. This is, for example, the case if **$Acc_{model}$(D)** indicates an accuracy **Acc(D)** of 85%, whereas the actual accuracy received by the sample re-computation only indicates only 20% of accurate pre-computed database query results within **D**. In this case, **$D_0$** is the right decision. If, however, the actual accuracy received by the sampling and the accuracy predicted by the model are similar, i.e. the deviation between both indications is relatively small, the accuracy predicted by the probabilistic model is probably appropriate. To give an example, this may be the case if **$Acc_{model}$(D)** indicates an accuracy **Acc(D)** of 85%

and $\dfrac{AC_N}{N}$ amounts to 80% accuracy. In this case, $D_1$ is the right decision.

In order to define the border between $D_0$ and $D_1$, a threshold $K_{Th}$ is introduced: If $AC_N > K_{Th}$, then the accuracy predicted by the probabilistic model $Acc_{model}(D)$ is considered as an appropriate approximation of $Acc(D)$, $D_0$ is chosen. If $AC_N \le K_{Th}$, then the accuracy predicted by the probabilistic model $Acc_{model}(D)$ is not considered to be an appropriate approximation of $Acc(D)$, $D_1$ is chosen.

In order to set $K_{Th}$ to an appropriate value, it is advantageous to have information about the quality of the probabilistic model. Such information is usually available from a model verification process which has been performed prior to deploying the model and/or during its ongoing use. For example, it may have been observed during one year of usage of the probabilistic model that asynchronous real-time events which are not reflected by the probabilistic model are rather rare and occur e.g. only on three days out of 365 days. In this case, it may be assumed that $Acc_{model}(D)$ is appropriate (= $H_0$) about 99% of the time and inappropriate only about 1% of the time (= $H_1$). In another example, asynchronous real-time events not included in the probabilistic model may occur relatively often such as on 180 days of one year. Hence, it may be assumed that $Acc_{model}(D)$ is appropriate only in every second case, i.e. up to 50% of the time (= $H_0$) and inappropriate otherwise (= $H_1$).

One exemplary way to set $K_{Th}$ by taking into account the past quality / reliability of the probabilistic model is to consider the probability of an erroneous decision $D_1$, i.e. $Acc_{model}(D)$ is not regarded to be an appropriate estimate of Acc(D) although it is actually one. The probability that the probabilistic model's prediction is correct can be expressed as:

$$P(AC_N = K|H_0) = \binom{K}{N} \times Acc_{model}(D)^K \times \left(1 - Acc_{model}(D)\right)^{N-K}$$

The probability $\alpha$ that hypothesis $H_0$ is true and an erroneous decision $D_1$ is taken is the probability that $AC_N$ is lower than $K_{Th}$:

$$\alpha = P(D_1|H_0) = P(AC_N \le K_{Th}|H_0) = \sum_{K \le K_{Th}} \binom{K}{N} \times Acc_{model}(D)^K \times \left(1 - Acc_{model}(D)\right)^{N-K}$$

This formula allows to choose $\alpha$ and define $K_{Th}$ in accordance with the past reliability of the probabilistic model. If, for example, the probabilistic model has been correct for 99% of the time, $\alpha$ is set to 0,01. The threshold value of $K_{Th}$ can then be calculated using the previous formula. If the number of $K$ accurate sample re-computation results is lower than $K_{Th}$, i.e. the actual accuracy estimation $\dfrac{AC_N}{N}$ determined by the sample re-computations is regarded as a more reliable estimation of $Acc(D)$ than $Acc_{model}(D)$:

| Number **N** of sample re-computations in order to estimate actual accuracy of share **D** | N = 10 | N = 20 | N = 50 | N = 100 |
|---|---|---|---|---|
| Number **K** of the **N** sample pre-computed database query results which are predicted to be accurate by the probabilistic model with $Acc_{model} = 0,85$ | K = 8 | K = 17 | K = 42 | K = 85 |
| Threshold $K_{Th}$ (with $\alpha = 0,01$) | 6 | 14 | 36 | 76 |
| Range for $AC_N$ (accurate sample re-computations) in which the event is not considered to be represented in the probabilistic model (with $\alpha = 0,01$ and corresponding $K_{Th}$) | $AC_N \le 5$ | $AC_N \le 13$ | $AC_N \le 35$ | $AC_N \le 75$ |

Thus, to summarize, if $AC_N$ is equal to or above $K_{Th}$, the asynchronous real-time event is considered to be represented in the probabilistic model and no amendment of the probabilities of the respective pre-computed database query results is necessary. If, however, if $AC_N$ is below $K_{Th}$, it is assumed that the event is not represented in the probabilistic model.

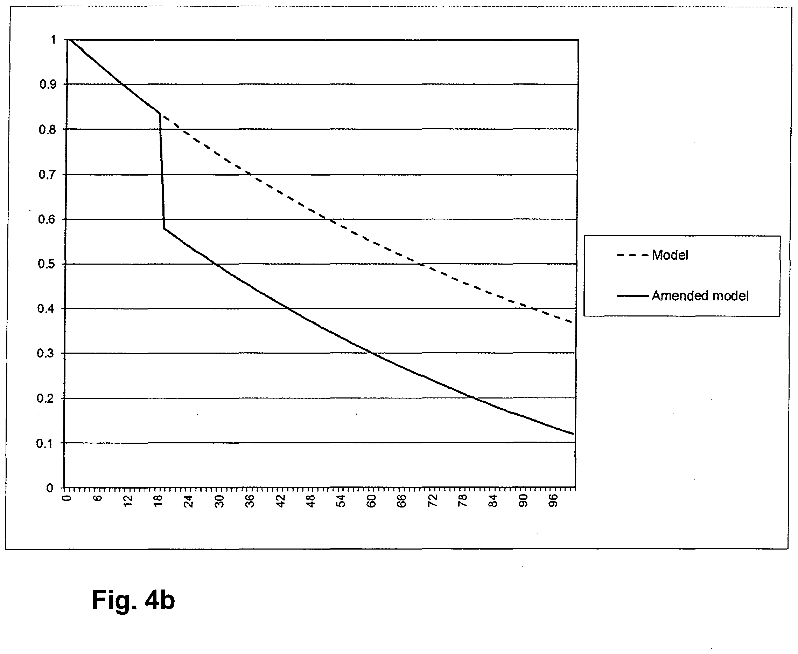

For events which are not predictable and, thus, not included in the probabilistic model at all like, for example, promotions campaigns or maintenance events, the events are processed as soon as possible. Generally, this means that the probabilities of those pre-computed database query results which are potentially affected by a particular real-time event are amended, in particular decreased. Continuing with the above example of determining whether or not an event is present in the probabilistic model, this amendment is optionally achieved by applying the estimation for **Acc(D)** gained by the sample re-computations, i.e. $\dfrac{AC_N}{N}$ to the probabilities of the pre-computed database query results in the share **D** being outdated. For example if $\dfrac{AC_N}{N}$ has been turned out to be 25% lower than the **Acc$_{model}$(D),** the probabilistic model's current accuracy predications for the pre-computed database query results in the share **D** are e.g. decreased by 25% as well. This exemplary amendment is visualized by Fig. 4b (the x- and y-axis in Fig. 4 have the same meaning as in Fig. 4a, i.e. the x-axis depicts the time since the last re-computation (= age **t**) in hours, the y-axis the accuracy / outdateness probability).

After this amendment has been done, the decision which pre-computed database query results are to be re-computed is taken as usual, i.e. in the same way as if no amendments of the probabilities had happened. Referring again to the exemplary historic-statistical model outlined above, the probability stated by the probabilistic model for the accuracy / outdateness is $e^{-\lambda_i t_i}$. However, since it can be amended in response to recognized asynchronous real-time events e.g. by applying the strategy described in detail above, it may actually be computed step after step: at time $\tau_n$ the probable accuracy / outdateness $Acc_i^{\tau_n}$ is computed from its previous value at time $\tau_{n-1}$:

$$Acc_i^{\tau_n} = Acc_i^{\tau_{n-1}} \times e^{-\lambda_i (\tau_n - \tau_{n-1})}$$

The next accuracy computation by the analyzer 6 starts again from the previous value (which has potentially been amended in response to real-time events).

The amendment of the probabilities in response to incoming asynchronous real-time events, e.g. the accuracy predicted by the probabilistic model, is reset after the respective pre-computed database query results are re-computed by the MCP 3 the next time.

Events which are represented in the probabilistic model at least to a certain extent like fares or availability changes, are optionally accumulated and their appearance is regularly compared with the predictions of the probabilistic model. When event peaks do not match the model locally, i.e. a burst of events is significantly outside the statistic underlying the probabilistic model, the impacted prices are marked as potentially outdated in order to re-compute them as soon as possible. By this, "noise" caused by events already present in the probabilistic model and therefore already considered by the determinations conducted by the analyzer 6 beforehand, is filtered out.

Optionally, the handling of incoming asynchronous real-time events is done by a dedicated component functionally separate from or a subcomponent of the consolidator 7, an event manager module. The events are received by the input manager 5 and initially stored without aggregation in the internal data repository. The event manager receives any incoming asynchronous real-time event, processes the event, e.g. by applying the strategy described in detail above, and possibly performs the amendment of the probabilities that the affected pre-computed database query results are outdated / inaccurate. Optionally, the strategy described above is only applied if a given number of events has been recognized by the event manager applies the strategy described above and amend the probable accuracy of each pre-computed database query results is amended accordingly only then, if necessary.

Optionally, for optimization purposes, the consolidator 7 works on a grid-view of the internal data representation 8, i.e. it considers groups of adjacent prices together during its algorithm instead of working on the set of prices in an isolated manner. In this approach, adjacent price data sets are seen as a single data set with aggregated properties' values. Working on aggregated data sets limits the generation of sparse re-computation orders, and thus increases mutualization and optimization opportunities at the MCP 3. This reduces computation costs.

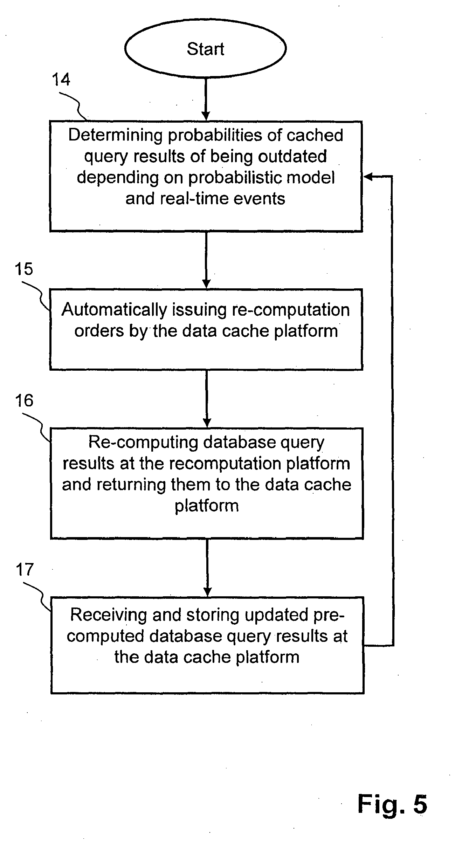

Fig. 5 summarizes the above detailed description and gives an overview of the cache update method presented herein.

The process of keeping the cache of pre-computed database query results up-to-date starts with the determination 14 of probabilities of inaccurateness of the cached query results. This determination is composed of two activities which are located on two logical levels: Firstly and generally, a predictive model based on statistical and probabilistic data is employed in order to estimate the likelihood that a particular cached query result does not correspond to the query result (hypothetically) re-calculated. Secondly and more specifically, real-time events are taken into account which potentially impact and increase, respectively, the probability that cached query results are outdated. These real-time events are characterized by the fact that they, in general, do not indicate an inaccuracy of particular cached query results with certainty, but are indeterministic in this respect. Thus, on their occurrence, one can only draw probabilistic conclusions on the likelihood of accuracy and inaccuracy, respectively.

On the basis of the determined probabilities that the cached database query results are outdated, the database re-computation orders are automatically issued 15 by the DCP 2. These orders are received by the MCP 3 which then re-computes the respective results and returns them 16 to the DCP 2. In turn, the DCP 2 receives the results and stores them 17 in a local representation 8. This concludes one update cycle and the next cycle re-iterates with the probability determination 14.

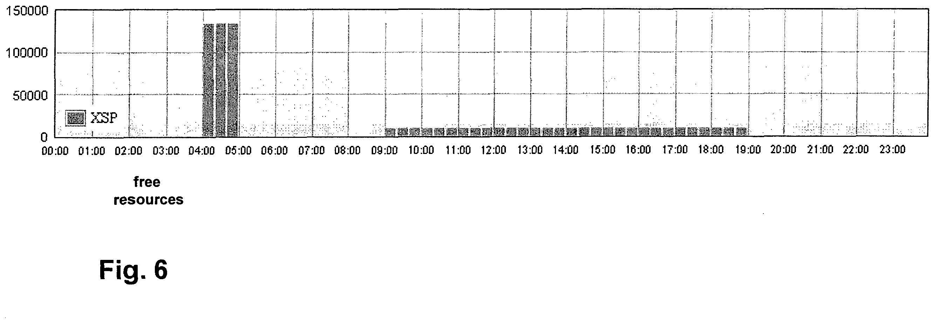

Next, a particular example with regard to timing of the procedure of the present cache update strategy is described with respect to Fig. 6. In this example, the DCP 2 is configured to generate re-computation orders every 20 minutes, i.e. a round or cycle of determining probabilities whether cached data is out-of-date and generating and issuing re-computation orders takes 20 minutes. The resources at the MCP 3 are known a priori for a whole day and the DCP 2 is aware of the computation resources available at the MCP 3 and is therefore able to synchronize the amount of re-computations with the MCP's 3 available resources.

At the beginning of a re-computation cycle, the DCP 2 analyzes the current accuracy of the cached database query results, i.e. the priced travel recommendations stored in the internal database 8. The round will yield a set of re-computation orders that will be processed by the MCP 3 at the end of the 20-minutes round. Meanwhile, on MCP 3 side, orders from the last cycle are being computed and new price recommendation are generated and transmitted back to the DCP, where they are stored and available for analysis and update of recurring information in the next cycle.

Fig. 6 shows that the MCP has significant available resources in the time interval between 04:00 and 05:00 a.m., so a lot of re-computations can be performed in this hour. Afterwards, however, no resources are available until 9:00 a.m., so no re-computation is possible at that time. Later during the day, from 09:00 a.m. to 7:00 p.m., some resources are available at the MCP 3.

During the cycle starting at 04:20 a.m., the analyzer 6 analyzes the cache accuracy, while the consolidator 7 generates re-computation orders accordingly. Those orders will be implemented by MCP 3 at 04:40 a.m.. The analyzer 6 focuses the MCP price recommendation it received at the beginning of the round. It counts the differences between the received prices and the previous prices whose values have been stored in an internal repository. Based on the differences, it amends the "volatility" recurring source of information. The input manager 5 saves the received MCP prices for further inspection.

In 4:40-to-5:00 a.m. cycle, the MCP 3 processes the re-computation orders received from the DCP 2 during the interval 04:20 to 4:40 a.m.. The DCP 2 is aware that it cannot generate any re-computation orders for the time slice to come (05:00 a.m.) and its successors until 09:00 a.m. However, it still analyzes the data model continuously to update the current accuracy of all cache priced travel recommendations. It will do the same for every future cycle until 08:40 a.m.

At 08:40 a.m., the analyzer 6 determines that the accuracy of the cache decreased during the previous four hours without any re-computation. It generates re-computation orders accordingly over the following cycles, but only to a less extent due to the limited amount of available resources at the MCP 3 from 09:00 a.m. to 7:00 p.m. Then, at 09:00 a.m., MCP 3 starts processing the new re-computation orders it received in the interval before (i.e. 08:40 to 09:00 a.m.) and will stop after the end of the round lasting from 6:40 to 7:00 p.m.

After that, no further resources are available at the MCP 3 throughout the night. Thus, the DCP 2 will not generate any further re-computation orders, but continue to analyze the cache accuracy on the basis of the probabilistic model and possibly incoming real-time events.

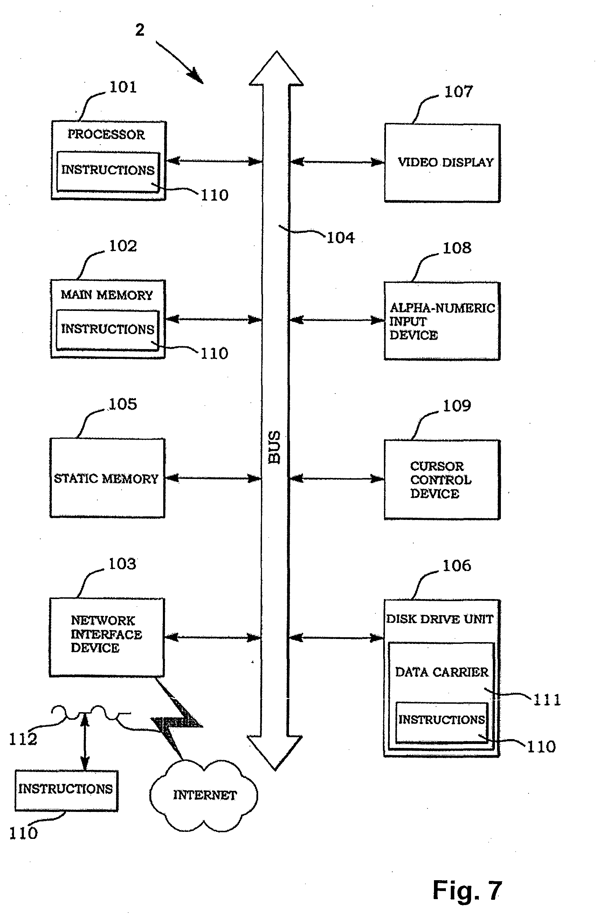

Finally, Fig. 7 is a diagrammatic representation of a computer system which provides the functionality of the cache platform 2 of Fig.2. Within the cache platform 2 a set of instructions, to cause the computer system to perform any of the methodologies discussed herein, may be executed. The cache platform 2 includes a processor 101, a main memory 102 and a network interface device 103, which communicate with each other via a bus 104. Optionally, it may further include a static memory 105 and a disk-drive unit 106. A video display 107, an alpha-numeric input device 108 and a cursor control device 109 may form a distribution list navigator user interface. The network interface device 103 connects the data cache platform 2 to the computation platform 3, the sources of statistical data needed to fill up the predictive model such as the statistics servers 9, the volatility database 10 and the initial accuracy database 11, the sources of real-time events, the Internet and/or any other network. A set of instructions (i.e. software) 110 embodying any one, or all, of the methodologies described above, resides completely, or at least partially, in or on a machine-readable medium, e.g. the main memory 102 and/or the processor 101. A machine-readable medium on which the software 110 resides may also be a non-volatile data carrier 111 (e.g. a non-removable magnetic hard disk or an optical or magnetic removable disk) which is part of disk drive unit 106. The software 110 may further be transmitted or received as a propagated signal 112 via the Internet through the network interface device 103.

The present cache update strategy provides a means to automatically generate cache re-computation decisions. It determines which cached query results are to be re-computed and controls the re-computation also time-wise by taking into account the available computation resources at the computation platform. Thus, in general, the accuracy of the cached query results is estimated on the probabilistic model which models the up-to-dateness and out-of-dateness, respectively, over time. This out-of-date-analyses enable processing several billions of sets of data per hour underlying the re-computation of cached database query results.

**Claims**

1. A method of updating pre-computed database query results in a distributed database system (1), wherein the distributed database system (1) comprises a data cache platform (2) maintaining the pre-computed database query results and a computation platform (3) for computing the pre-computed database query results based on data maintained in the computation platform (3), wherein the data cache platform (2) maintains a probabilistic model modeling discrepancies between the pre-computed database query results maintained in the data cache platform (2) and presumed actual database query results, the method comprising:

   - determining, by the data cache platform (2), probabilities of the pre-computed database query results being outdated based on the probabilistic model;
   - detecting, by the data cache platform (2), an asynchronous real-time event which has a probabilistic influence on the discrepancies between the pre-computed database query results maintained in the data cache platform (2) and presumed actual database query results;
   - analyzing, at the data cache platform (2), whether the asynchronous real-time event is represented in the probabilistic model;
   - increasing, by the data cache platform (2), the determined probabilities of the pre-computed database query results being outdated if the asynchronous real-time events is determined to be not represented in the probabilistic model;
   - automatically issuing (15), by the data cache platform (2), re-computation orders to the computation platform (3) for updating pre-computed database query results on the basis of the determined probabilities of the pre-computed database query results being outdated, wherein pre-computed database query results having a probability of being outdated above a given threshold are ordered to be re-computed; and
   - receiving (17), at the data cache platform (2), the updated pre-computed database query results as results of the re-computation orders.

2. Method according to claim 1, wherein detecting the asynchronous real-time event and/or analyzing whether the asynchronous real-time event is represented in the probabilistic model comprises:

   - determining an accuracy of a share of pre-computed database query results maintained in the data cache platform, the share of pre-computed database query results being potentially affected by the asynchronous real-time event;
   - comparing the determined accuracy with a prediction of the accuracy of the share of pre-computed database query results by the probabilistic model; and
   - determining that the asynchronous real-time event is not represented in the probabilistic model if the determined accuracy is below the predicted accuracy to a given extent.

3. Method according to claim 2, wherein determining the accuracy of the share of pre-computed database query results comprises issuing sample re-computation orders to computation platform and comparing the results of the sample re-computation orders with the respective pre-computed database query results previously maintained in the data cache platform.

4. Method according to claim 2 or 3, wherein the given extent is defined by a threshold value which is defined in accordance with the past reliability of the probabilistic model.

5. Method according to any of claims 2 to 4, wherein increasing the determined probabilities of the pre-computed database query results comprises increasing the probabilities of the pre-computed database query results in the share to the determined accuracy of the share.

6. Method according to any of claims 1 to 5, further comprising:

   - for real-time events which are determined to be not represented in the probabilistic model, issuing re-computation orders regarding potentially affected pre-computed database query results as soon as possible.

7.  Method according to any of claims 1 to 6, further comprising:

    - for real-time events which are determined to be represented in the probabilistic model, accumulating such real-time events over a certain period of time, comparing the actually occurred and accumulated real-time events with their representation in the probabilistic model and, if the actually occurred accumulated real-time events deviate from their representation in the probabilistic model to a predetermined extent, issuing re-computation orders with respect to potentially affected pre-computed database query results as soon as possible.

8.  Method according to any of the previous claims, wherein the data cache platform (2), when determining the probabilities of the pre-computed database query results of being outdated and issuing the re-computation, considers grids of pre-computed database query results corresponding to groups of adjacent sets of data maintained in the computation platform (3).

9.  Method according to any of the previous claims, wherein the data cache platform (2) issues the re-computation orders based on the amount of available computation resources at the computation platform (3).

10. Method according to any of the previous claims, wherein the distributed database system (1) is a travel reservation system, wherein the computation platform (3) maintains information on travel availability and fares and the data cache platform (2) maintains priced travel recommendations calculated from the travel availability information and the fares.

11. Method according to claim 10, wherein the real-time events comprise flight fare changes, airplane seat availability changes, client flight ticket requests and/or flight cancellations.

12. Method according to any of the previous claims, wherein the distributed database system (1) comprises at least one application platform (4) connected to the computation platform (3), the at least one application platform (4) maintaining and organizing the pre-computed database query results, the database query results stored in the at least one application platform (4) being populated and/or updated by the computation platform (3) as a result of the re-computation orders issued by the data cache platform (2).

13. Data cache platform (2) maintaining pre-computed database query results computed by a computation platform (3) based on data maintained in the computation platform (3), the data cache platform (2) being configured to:

    - maintain a probabilistic model modeling discrepancies between the pre-computed database query results maintained in the data cache platform (2) and presumed actual database query results,
    - determine probabilities of the pre-computed database query results being outdated based on the probabilistic model,
    - detect an asynchronous real-time event which has a probabilistic influence on the discrepancies between the pre-computed database query results maintained in the data cache platform (2) and presumed actual database query results;
    - analyze whether the asynchronous real-time event is represented in the probabilistic model;
    - increase the determined probabilities of the pre-computed database query results being outdated if the asynchronous real-time events is determined to be not represented in the probabilistic model;
    - automatically issue re-computation orders to the computation platform (3) for updating pre-computed database query results on the basis of the determined probabilities of the pre-computed database query results being outdated, wherein pre-computed database query results having a probability of being outdated above a given threshold are ordered to be re-computed; and
    - receive the updated pre-computed database query results as results of the re-computation orders.

14. Data cache platform (2) according to claim 13, being further configured to

    - for real-time events which are not represented in the probabilistic model, issue re-computation orders regarding the respective particular pre-computed database query results as soon as possible;
    - for real-time events which are represented in the probabilistic model, accumulate such real-time events over a certain period of time, compare the actually occurred and accumulated real-time events with their representation in the probabilistic model and, if the actually occurred accumulated real-time events deviate from their representation in the probabilistic model to a predetermined extent, issue re-computation orders with respect to potentially affected pre-computed database query results as soon as possible.

15. A computer program, which when executed on a computer system, causes the computer system (2) to:

- maintain a probabilistic model modeling discrepancies between pre-computed database query results maintained in the computer system (2) and presumed actual database query results;
- determine probabilities of pre-computed database query results being outdated based on the probabilistic model;
- detect an asynchronous real-time event which has a probabilistic influence on the discrepancies between the pre-computed database query results maintained in the computer system (2) and presumed actual database query results;
- analyze whether the asynchronous real-time event is represented in the probabilistic model;
- increase the determined probabilities of the pre-computed database query results being outdated if the asynchronous real-time events is determined to be not represented in the probabilistic model;
- automatically issue re-computation orders for updating pre-computed database query results on the basis of the determined probabilities of the pre-computed database query results being outdated, wherein pre-computed database query results having a probability of being outdated above a given threshold are ordered to be re-computed; and
- receive the updated pre-computed database query results as results of the re-computation orders.

**Patentansprüche**

1. Ein Verfahren zum Aktualisieren von vorberechneten Datenbankabfrageergebnissen in einem verteilten Datenbanksystem (1), wobei das verteilte Datenbanksystem (1) eine Datencacheplattform (2), die die vorberechneten Datenbankabfrageergebnisse verwaltet, und eine Berechnungsplattform (3) zur Berechnung der vorberechneten Datenbankabfrageergebnisse basierend auf Daten, die in der Berechnungsplattform (3) verwaltet werden, umfasst, wobei die Datencacheplattform (2) ein probabilistisches Modell verwaltet, das Diskrepanzen zwischen den vorberechneten Datenbankabfrageergebnissen, die in der Datencacheplattform (2) verwaltet werden, und den angenommenen tatsächlichen Datenbankabfrageergebnissen modelliert, wobei das Verfahren umfasst:

- Bestimmen, durch die Datencacheplattform (2) und basierend auf dem probabilistischen Modell, von Wahrscheinlichkeiten dafür, dass die vorberechneten Datenbankabfrageergebnisse veraltet sind;
- Erfassen, durch die Datencacheplattform (2), eines asynchronen Echtzeitereignisses, das probabilistischen Einfluss hat auf die Diskrepanzen zwischen den vorberechneten Datenbankabfrageergebnissen, die in der Datencacheplattform (2) verwaltet werden, und den angenommenen tatsächlichen Datenbankabfrageergebnissen;
- Analysieren, in der Datencacheplattform (2), ob das asynchrone Echtzeitereignis im probabilistischen Modell dargestellt ist;
- Erhöhen, durch die Datencacheplattform (2), der bestimmten Wahrscheinlichkeiten der vorberechneten Datenbankabfrageergebnisse, dafür, veraltet zu sein, wenn bestimmt wird, dass das asynchrone Echtzeitereignis nicht im probabilistischen Modell dargestellt ist;
- automatisches Ausgeben (15), durch die Datencacheplattform (2), von Neuberechnungsbefehlen an die Berechnungsplattform (3), um die vorberechneten Datenbankabfrageergebnisse zu aktualisieren, basierend auf den bestimmten Wahrscheinlichkeiten dafür, dass die vorberechneten Datenbankabfrageergebnisse veraltet sind, wobei befohlen wird, die vorberechneten Datenbankabfrageergebnisse neu zu berechnen, die eine Wahrscheinlichkeit über einem vorgegebenen Grenzwert haben, veraltet zu sein;
- Empfangen (17), in der Datencacheplattform (2), der aktualisierten vorberechneten Datenbankabfrageergebnisse als Ergebnisse der Neuberechnungsbefehle.

2. Verfahren nach Anspruch 1, wobei das Erfassen des asynchronen Echtzeitereignisses und/oder das Analysieren, ob das asynchrone Echtzeitereignis im probabilistischen Modell dargestellt ist, umfasst:

- Bestimmen einer Genauigkeit eines Teils der vorberechneten Datenbankabfrageergebnisse, die in der Datencacheplattform verwaltet werden, wobei der Teil der vorberechneten Datenbankabfrageergebnisse möglicherweise durch das asynchrone Echtzeitereignis beeinflusst wird;
- Vergleichen der bestimmten Genauigkeit mit einer Vorhersage des probabilistischen Modells für die Genauigkeit des Teils der vorberechneten Datenbankabfrageergebnisse; und

- Bestimmen, dass das asynchrone Echtzeitereignis nicht im probabilistischen Modell dargestellt ist, wenn die bestimmte Genauigkeit zu einem vorgegebenen Ausmaß niedriger ist als die vorhergesagte Genauigkeit.

3. Verfahren nach Anspruch 2, wobei das Bestimmen der Genauigkeit des Teils der vorberechneten Datenbankabfrageergebnisse umfasst, Proben-Neuberechnungsbefehle an die Berechnungsplattform zu auszugeben und die Ergebnisse der Proben-Neuberechnungsbefehle mit den jeweiligen vorberechneten Datenbankabfrageergebnissen zu vergleichen, die zuvor in der Datencacheplattform verwaltet wurden.

4. Verfahren nach Anspruch 2 oder 3, wobei das vorgegebene Ausmaß durch einen Grenzwert definiert wird, der gemäß der vorangegangenen Verlässlichkeit des probabilistischen Modells definiert wird.

5. Verfahren nach einem der Ansprüche 2 bis 4, wobei das Erhöhen der bestimmten Wahrscheinlichkeiten der vorberechneten Datenbankabfrageergebnisse umfasst, die Wahrscheinlichkeiten der vorberechneten Datenbankabfrageergebnisse im Teil auf die bestimmte Genauigkeit des Teils zu erhöhen.

6. Verfahren nach einem der Ansprüche 1 bis 5, weiter umfassend:

- für Echtzeitereignisse, bei denen bestimmt wurde, dass sie nicht im probabilistischen Modell dargestellt sind, baldmögliches Ausgeben der Neuberechnungsbefehle für möglicherweise betroffene vorberechnete Datenbankabfrageergebnisse.

7. Verfahren nach einem der Ansprüche 1 bis 6, weiter umfassend:

- für Echtzeitereignisse, die bestimmt werden im probabilistischen Modell dargestellt zu sein, Akkumulieren solcher Echtzeitereignisse über eine bestimmte Zeitdauer, Vergleichen der tatsächlich aufgetretenen und akkumulierten Echtzeitereignisse mit deren Darstellung im probabilistischen Modell und, wenn die tatsächlich aufgetretenen angesammelten Echtzeitereignisse von ihrer Darstellung im probabilistischen Modell in einem vorbestimmten Ausmaß abweichen, baldmögliches Ausgeben von Neuberechnungsbefehlen für möglicherweise betroffene vorberechnete Datenbankabfrageergebnisse.

8. Verfahren nach einem der vorhergehenden Ansprüche, wobei die Datencacheplattform (2), beim Bestimmen, dass die Wahrscheinlichkeiten der vorberechneten Datenbankabfrageergebnisse veraltet sind, und beim Ausgeben der Neuberechnung, Raster von vorberechneten Datenbankabfrageergebnissen mit einbezieht, die Gruppen von adjazenten Datensätzen entsprechen, die in der Berechnungsplattform (3) verwaltet werden.

9. Verfahren nach einem der vorhergehenden Ansprüche, wobei die Datencacheplattform (2) die Neuberechnungsbefehle basierend auf der Anzahl der verfügbaren Berechnungsressourcen in der Berechnungsplattform (3) ausgibt.

10. Verfahren nach einem der vorhergehenden Ansprüche, wobei das verteilte Datenbanksystem (1) ein Reise-Reservierungssystem ist, wobei die Berechnungsplattform (3) Informationen über Reiseverfügbarkeit und Transportkosten verwaltet und die Datencacheplattform (2) Reiseempfehlungen mit Preisangaben verwaltet, die aus der Reiseverfügbarkeitsinformation und den Transportkosten berechnet wurden.

11. Verfahren nach Anspruch 10, wobei die Echtzeitereignisse Flugpreisänderungen, Flugzeugsitzplatzverfügbarkeitsänderungen, Flugticketanfragen der Kunden und/oder Streichungen von Flügen umfassen.

12. Verfahren nach einem der vorhergehenden Ansprüche wobei das verteilte Datenbanksystem (1) mindestens eine Anwendungsplattform (4) umfasst, die mit der Berechnungsplattform (3) verbunden ist, wobei die mindestens eine Anwendungsplattform (4) die vorberechneten Datenbankabfrageergebnisse verwaltet und organisiert, wobei die Datenbankabfrageergebnisse, die in der mindestens einen Anwendungsplattform (4) gespeichert sind, durch die Berechnungsplattform (3) befüllt und/oder aktualisiert werden als ein Ergebnis der Neuberechnungsbefehle, die von der Datencacheplattform (2) ausgegeben wurden.

13. Datencacheplattform (2), die die vorberechneten Datenbankabfrageergebnisse verwaltet, die berechnet wurden durch eine Berechnungsplattform (3), basierend auf Daten, die in der Berechnungsplattform (3) verwaltet werden, wobei die Datencacheplattform (2) ausgestaltet ist,

- ein probabilistisches Modell zu verwalten, dass die Diskrepanzen zwischen den vorberechneten Datenbankabfrageergebnissen, die in der Datencacheplattform (2) verwaltet werden, und den angenommenen tatsächlichen Datenbankabfrageergebnissen modelliert,
- basierend auf dem probabilistischen Modell Wahrscheinlichkeiten dafür zu bestimmen, dass die vorberechneten Datenbankabfrageergebnisse veraltet sind,
- ein asynchrones Echtzeitereignis zu erfassen, welches probabilistischen Einfluss hat auf die Diskrepanzen zwischen den vorberechneten Datenbankabfrageergebnissen, die in der Datencacheplattform (2) verwaltet werden, und den angenommenen tatsächlichen Datenbankabfrageergebnissen;
- zu analysieren, ob das asynchrone Echtzeitereignis im probabilistischen Modell dargestellt ist;
- die Wahrscheinlichkeiten der vorberechneten Datenbankabfrageergebnisse dafür, veraltet zu sein, zu erhöhen, wenn bestimmt wird, dass das asynchrone Echtzeitereignis nicht im probabilistischen Modell dargestellt wird;
- automatisch Neuberechnungsbefehle an die Berechnungsplattform (3) dafür auszustellen, die vorberechneten Datenbankabfrageergebnisse basierend auf den bestimmten Wahrscheinlichkeiten dafür, dass die vorberechneten Datenbankabfrageergebnisse veraltet sind, zu aktualisieren, wobei befohlen wird, die vorberechneten Datenbankabfrageergebnisse neu zu berechnen, die eine Wahrscheinlichkeit über einem vorgegebenen Grenzwert haben, veraltet zu sein; und
- die aktualisierten vorberechneten Datenbankabfrageergebnisse als Ergebnisse der Neuberechnungsbefehle zu empfangen.

**14.** Datencacheplattform (2) nach Anspruch 13 weiter ausgestaltet,

- für Echtzeitereignisse, die nicht im probabilistischen Modell dargestellt werden, Neuberechnungsbefehle mit Bezug auf die jeweiligen speziellen vorberechneten Datenbankabfrageergebnisse baldmöglich auszugeben;
- für Echtzeitereignisse, die im probabilistischen Modell dargestellt werden, derartige Echtzeitereignisse über eine bestimmte Zeitdauer zu akkumulieren, die tatsächlich aufgetretenen und akkumulierten Echtzeitereignisse mit deren Darstellung im probabilistischen Modell zu vergleichen und, wenn die tatsächlich aufgetretenen akkumulierten Echtzeitereignisse von deren Darstellung im probabilistischen Modell zu einem vorbestimmten Ausmaß abweichen, Neuberechnungsbefehle für möglicherweise betroffene vorberechnete Datenbankabfrageergebnisse baldmöglich auszugeben.

**15.** Ein Computerprogramm, welches, sobald es auf einem Computersystem ausgeführt wird, dass Computersystem (2) veranlasst,

- ein probabilistisches Modell zu verwalten, dass die Diskrepanzen zwischen vorberechneten Datenbankabfrageergebnissen, die im Computersystem (2) verwaltet werden, und angenommenen tatsächlichen Datenbankabfrageergebnissen modelliert;
- basierend auf dem probabilistischen Modell Wahrscheinlichkeiten dafür zu bestimmen, dass vorberechnete Datenbankabfrageergebnisse veraltet sind;
- ein asynchrones Echtzeitereignis zu bestimmen, dass einen probabilistischen Einfluss hat auf die Diskrepanzen zwischen den vorberechneten Datenbankabfrageergebnissen, die im Computersystem (2) verwaltet werden, und angenommenen tatsächlichen Datenbankabfrageergebnissen;
- zu analysieren, ob das asynchrone Echtzeitereignis im probabilistischen Modell dargestellt ist;
- die Wahrscheinlichkeiten der vorberechneten Datenbankabfrageergebnisse dafür, veraltet zu sein, zu erhöhen, wenn bestimmt wird, dass das asynchrone Echtzeitereignis nicht im probabilistischen Modell dargestellt ist;
- automatisch Neuberechnungsbefehle dafür auszugeben, dass die vorberechneten Datenbankabfrageergebnisse aktualisiert werden, auf Basis der bestimmten Wahrscheinlichkeiten dafür, dass die vorberechneten Datenbankabfrageergebnissen veraltet sind, wobei befohlen wird die vorberechneten Datenbankabfrageergebnisse neu zu berechnen, die eine Wahrscheinlichkeit über einem vorbestimmten Grenzwert haben, veraltet zu sein; und
- die aktualisierten vorberechneten Datenbankabfrageergebnisse als Ergebnisse der Neuberechnungsbefehle zu empfangen.

**Revendications**

**1.** Méthode de mise à jour de résultats d'interrogation de base de données pré-calculés dans un système de base de données distribué (1), dans laquelle le système de base de données distribué (1) comprend une plate-forme de cache de données (2) maintenant les résultats d'interrogation de base de données pré-calculés et une plate-forme de calcul (3) pour calculer les résultats d'interrogation de base de données pré-calculés sur la base de données maintenues dans la plate-forme de calcul (3), dans laquelle la plate-forme de cache de données (2) maintient un modèle probabiliste modélisant des écarts entre les résultats d'interrogation de base de données pré-calculés maintenus dans la plate-forme de cache de données (2) et des résultats d'interrogation de base de données réelles présumés, la méthode comprenant :

- la détermination, par la plate-forme de cache de données (2), de probabilités des résultats d'interrogation de base de données pré-calculés d'être obsolètes sur la base du modèle probabiliste ;
- la détection, par la plate-forme de cache de données (2), d'un événement asynchrone en temps réel qui a une influence probabiliste sur les écarts entre les résultats d'interrogation de base de données pré-calculés maintenus dans la plate-forme de cache de données (2) et des résultats d'interrogation de base de données réelles présumés ;
- le fait d'analyser, au niveau de la plate-forme de cache de données (2), si l'événement asynchrone en temps réel est représenté dans le modèle probabiliste ;
- l'augmentation, par la plate-forme de cache de données (2), des probabilités déterminées des résultats d'interrogation de base de données pré-calculés d'être obsolètes si l'événement asynchrone en temps réel est déterminé comme n'étant pas représenté dans le modèle probabiliste ;
- l'émission automatique (15), par la plate-forme de cache de données (2), d'ordres de recalcul à la plate-forme de calcul (3) pour mettre à jour les résultats d'interrogation de base de données pré-calculés sur la base des probabilités déterminées des résultats d'interrogation de base de données pré-calculés d'être obsolètes, dans laquelle il est ordonné que les résultats d'interrogation de base de données pré-calculés ayant une probabilité d'être obsolètes au-dessus d'un seuil donné soient recalculés ; et
- la réception (17), au niveau de la plate-forme de cache de données (2), des résultats d'interrogation de base de données pré-calculés mis à jour en tant que résultats des ordres de recalcul.

2. Méthode selon la revendication 1, dans laquelle la détection de l'événement asynchrone en temps réel et/ou le fait d'analyser si l'événement asynchrone en temps réel est représenté dans le modèle probabiliste comprend :

- la détermination d'une précision d'une partie de résultats d'interrogation de base de données pré-calculés maintenus dans la plate-forme de cache de données, la partie de résultats d'interrogation de base de données pré-calculés étant potentiellement affectée par l'événement asynchrone en temps réel ;
- la comparaison de la précision déterminée avec une prédiction de la précision de la partie de résultats d'interrogation de base de données pré-calculés par le modèle probabiliste ; et
- la détermination que l'événement asynchrone en temps réel n'est pas représenté dans le modèle probabiliste si la précision déterminée est au-dessous de la précision prédite dans une mesure donnée.

3. Méthode selon la revendication 2, dans laquelle la détermination de la précision de la partie de résultats d'interrogation de base de données pré-calculés comprend l'émission d'ordres de recalcul d'échantillon à la plate-forme de calcul et la comparaison des résultats des ordres de recalcul d'échantillon avec les résultats d'interrogation de base de données pré-calculés respectifs précédemment maintenus dans la plate-forme de cache de données.

4. Méthode selon la revendication 2 ou 3, dans laquelle la mesure donnée est définie par une valeur de seuil qui est définie conformément à la fiabilité passée du modèle probabiliste.

5. Méthode selon l'une quelconque des revendications 2 à 4, dans laquelle l'augmentation des probabilités déterminées des résultats d'interrogation de base de données pré-calculés comprend l'augmentation des probabilités des résultats d'interrogation de base de données pré-calculés dans la partie à la précision déterminée de la partie.

6. Méthode selon l'une quelconque des revendications 1 à 5, comprenant en outre :

- pour des événements en temps réel qui sont déterminés comme n'étant pas représentés dans le modèle probabiliste, l'émission d'ordres de recalcul concernant des résultats d'interrogation de base de données pré-calculés potentiellement affectés dès que possible.

7. Méthode selon l'une quelconque des revendications 1 à 6, comprenant en outre :

- pour des événements en temps réel qui sont déterminés comme étant représentés dans le modèle probabiliste, l'accumulation de ces événements en temps réel sur une certaine période de temps, la comparaison des événements en temps réel accumulés et effectivement survenus avec leur représentation dans le modèle probabiliste et, si les événements en temps réel accumulés effectivement survenus s'écartent de leur représentation dans le modèle probabiliste dans une mesure prédéterminée, l'émission d'ordres de recalcul par rapport à des résultats d'interrogation de base de données pré-calculés potentiellement affectés dès que possible.

8. Méthode selon l'une quelconque des revendications précédentes, dans laquelle la plate-forme de cache de données (2), lors de la détermination des probabilités des résultats d'interrogation de base de données pré-calculés d'être obsolètes et l'émission du recalcul, considère des grilles de résultats d'interrogation de base de données pré-calculés correspondant à des groupes d'ensemble adjacents de données maintenues dans la plate-forme de calcul (3).

9. Méthode selon l'une quelconque des revendications précédentes, dans laquelle la plate-forme de cache de données (2) émet les ordres de recalcul sur la base de la quantité de ressources de calcul disponibles au niveau de la plate-forme de calcul (3).

10. Méthode selon l'une quelconque des revendications précédentes, dans laquelle le système de base de données distribué (1) est un système de réservation de voyages, dans lequel la plate-forme de calcul (3) maintient des informations sur une disponibilité de voyage et des tarifs et la plate-forme de cache de données (2) maintient des recommandations de voyage avec prix calculées à partir des informations de disponibilité de voyage et des tarifs.

11. Méthode selon la revendication 10, dans laquelle les événements en temps réel comprennent des changements de tarifs de vol, des changements de disponibilité de places d'avion, des demandes de billets d'avion de client et/ou des annulations de vol.

12. Méthode selon l'une quelconque des revendications précédentes, dans laquelle le système de base de données distribué (1) comprend au moins une plate-forme d'application (4) connectée à la plate-forme de calcul (3), l'au moins une plate-forme d'application (4) maintenant et organisant les résultats d'interrogation de base de données pré-calculés, les résultats d'interrogation de base de données stockés dans l'au moins une plate-forme d'application (4) étant alimentés et/ou mis à jour par la plate-forme de calcul (3) en tant qu'un résultat des ordres de recalcul émis par la plate-forme de cache de données (2).

13. Plate-forme de cache de données (2) maintenant des résultats d'interrogation de base de données pré-calculés calculés par une plate-forme de calcul (3) sur la base de données maintenues dans la plate-forme de calcul (3), la plate-forme de cache de données (2) étant configurée pour :

   - maintenir un modèle probabiliste modélisant des écarts entre les résultats d'interrogation de base de données pré-calculés maintenus dans la plate-forme de cache de données (2) et des résultats d'interrogation de base de données réelles présumés,
   - déterminer des probabilités des résultats d'interrogation de base de données pré-calculés d'être obsolètes sur la base du modèle probabiliste,
   - détecter un événement asynchrone en temps réel qui a une influence probabiliste sur les écarts entre les résultats d'interrogation de base de données pré-calculés maintenus dans la plate-forme de cache de données (2) et des résultats d'interrogation de base de données réelles présumés ;
   - analyser si l'événement asynchrone en temps réel est représenté dans le modèle probabiliste ;
   - augmenter les probabilités déterminées des résultats d'interrogation de base de données pré-calculés d'être obsolètes si l'événement asynchrone en temps réel est déterminé comme n'étant pas représenté dans le modèle probabiliste ;
   - émettre automatiquement des ordres de recalcul à la plate-forme de calcul (3) pour mettre à jour les résultats d'interrogation de base de données pré-calculés sur la base des probabilités déterminées des résultats d'interrogation de base de données pré-calculés d'être obsolètes, dans laquelle il est ordonné que les résultats d'interrogation de base de données pré-calculés ayant une probabilité d'être obsolètes au-dessus d'un seuil donné soient recalculés ; et
   - recevoir les résultats d'interrogation de base de données pré-calculés mis à jour en tant que résultats des ordres de recalcul.

14. Plate-forme de cache de données (2) selon la revendication 13, configurée en outre pour

   - pour des événements en temps réel qui ne sont pas représentés dans le modèle probabiliste, émettre des ordres de recalcul concernant les résultats d'interrogation de base de données pré-calculés particuliers respectifs dès que possible ;

- pour des événements en temps réel qui sont représentés dans le modèle probabiliste, accumuler ces événements en temps réel sur une certaine période de temps, comparer les événements en temps réel accumulés et effectivement survenus avec leur représentation dans le modèle probabiliste et, si les événements en temps réel accumulés effectivement survenus s'écartent de leur représentation dans le modèle probabiliste dans une mesure prédéterminée, émettre des ordres de recalcul par rapport à des résultats d'interrogation de base de données pré-calculés potentiellement affectés dès que possible.

**15.** Programme informatique qui, quand il est exécuté sur un système informatique, amène le système informatique (2) à :

- maintenir un modèle probabiliste modélisant des écarts entre les résultats d'interrogation de base de données pré-calculés maintenus dans le système informatique (2) et des résultats d'interrogation de base de données réelles présumés ;

- déterminer des probabilités des résultats d'interrogation de base de données pré-calculés d'être obsolètes sur la base du modèle probabiliste ;

- détecter un événement asynchrone en temps réel qui a une influence probabiliste sur les écarts entre les résultats d'interrogation de base de données pré-calculés maintenus dans le système informatique (2) et des résultats d'interrogation de base de données réelles présumés ;

- analyser si l'événement asynchrone en temps réel est représenté dans le modèle probabiliste ;

- augmenter les probabilités déterminées des résultats d'interrogation de base de données pré-calculés d'être obsolètes si l'événement asynchrone en temps réel est déterminé comme n'étant pas représenté dans le modèle probabiliste ;

- émettre automatiquement des ordres de recalcul pour mettre à jour les résultats d'interrogation de base de données pré-calculés sur la base des probabilités déterminées des résultats d'interrogation de base de données pré-calculés d'être obsolètes, dans lequel il est ordonné que les résultats d'interrogation de base de données pré-calculés ayant une probabilité d'être obsolètes au-dessus d'un seuil donné soient recalculés ; et

- recevoir les résultats d'interrogation de base de données pré-calculés mis à jour en tant que résultats des ordres de recalcul.

EP 2 885 725 B1

**3**

pre-computed
database query results

**1**

Re-computation
orders

**2**

predictive
model

asynchronous
real-time events

**Fig. 1**

Fig. 2

EP 2 885 725 B1

Fig. 3

**Volatility effect**

Fig. 4a

EP 2 885 725 B1

Fig. 4b

```
                    ┌─────────────┐
                    │    Start    │
                    └──────┬──────┘
   14                      │
                           ▼
   ┌───────────────────────────────────────┐
   │  Determining probabilities of cached   │
   │   query results of being outdated      │◄──┐
   │  depending on probabilistic model      │   │
   │        and real-time events            │   │
   └───────────────────────────────────────┘   │
   15                      │                     │
                           ▼                     │
   ┌───────────────────────────────────────┐   │
   │  Automatically issuing re-computation  │   │
   │    orders by the data cache platform   │   │
   └───────────────────────────────────────┘   │
   16                      │                     │
                           ▼                     │
   ┌───────────────────────────────────────┐   │
   │     Re-computing database query        │   │
   │   results at the recomputation platform│   │
   │   and returning them to the data cache │   │
   │              platform                  │   │
   └───────────────────────────────────────┘   │
   17                      │                     │
                           ▼                     │
   ┌───────────────────────────────────────┐   │
   │   Receiving and storing updated pre-   │   │
   │  computed database query results at    │───┘
   │        the data cache platform         │
   └───────────────────────────────────────┘
```

**Fig. 5**

Fig. 6

30

**2**

101
PROCESSOR
INSTRUCTIONS
~110

102
MAIN MEMORY
INSTRUCTIONS
~110

105
STATIC MEMORY

103
NETWORK
INTERFACE
DEVICE

112

INSTRUCTIONS
110

INTERNET

104
BUS

107
VIDEO DISPLAY

108
ALPHA-NUMERIC
INPUT
DEVICE

109
CURSOR
CONTROL
DEVICE

106
DISK DRIVE UNIT
DATA CARRIER
~111
INSTRUCTIONS
~110

**Fig. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0133472 A
- WO 0225557 A
- WO 9922315 A
- US 6725333 B
- EP 2521074 A1
- EP 11305518 A